# FASCICULE DE BREVET EUROPEEN

(11) **EP 4 023 873 B1**
(45) Date de publication et mention de la délivrance du brevet: **20.11.2024**
(21) Numéro de dépôt: 21213323.5
(22) Date de dépôt: 09.12.2021
(51) Int. Cl.: F02M 25/022, F02M 25/025, F16K 15/00, B01D 27/10, B01D 35/147, B01D 35/153, B01D 46/00

(54) **DISPOSITIF DE FILTRATION ET UTILISATION D'UN DISPOSITIF DE FILTRATION, POUR ÉPURER UNE EAU DESTINÉE À UNE CHAMBRE DE COMBUSTION D'UN VÉHICULE**
FILTERANORDNUNG UND VERWENDUNG EINER FILTERVORRICHTUNG ZUR REINIGUNG VON WASSER, DAS FÜR EINE BRENNKAMMER EINES FAHRZEUGS BESTIMMT IST
FILTERING ARRANGEMENT AND USE OF A FILTERING DEVICE FOR PURIFYING WATER INTENDED FOR A COMBUSTION CHAMBER OF A VEHICLE

(30) Priorité: 31.12.2020 FR 2014291
(43) Date de publication de la demande: 06.07.2022
(73) Titulaire: SOGEFI FILTRATION, 78280 Guyancourt (FR)
(72) Inventeur: COLLICARD, Florent, 35140 SAINT-AUBIN-DU-CORMIER (FR); RIVIERE, Lucie, 14310 COULVAIN (FR); BERLAND, Yann, 78660 ABLIS (FR)
(74) Mandataire: Plasseraud IP

(56) Documents cités:
- EP-A1- 2 601 141
- EP-A1- 3 324 031
- EP-A2- 2 789 839
- EP-B1- 2 601 141
- DE-A1- 102010 063 207
- FR-A1- 2 830 284
- US-A1- 2004 112 807
- US-A1- 2020 360 842

## Description

L'invention concerne les systèmes d'alimentation en eau à destination d'une chambre de combustion d'un véhicule motorisé, en complément du carburant, et plus particulièrement les agencements de filtration permettant de distribuer une eau filtrée afin de ne pas encrasser les injecteurs. L'invention concerne aussi un module de prélèvement d'eau incluant ce type d'agencement de filtration et une utilisation d'un dispositif de filtration mis en oeuvre dans une ligne de distribution d'eau vers un moteur à combustion interne.

Il devient de plus en plus fréquent d'injecter de l'eau dans la chambre de combustion. L'injection d'eau dans un moteur à combustion interne peut permettre une réduction significative de la consommation de carburant, mais aussi de l'émission des polluants comme les particules fines, le monoxyde de carbone (réduction typiquement de 4 à 15 % de CO₂) et les hydrocarbures volatiles. L'injection d'eau peut se faire à différents endroits, notamment au niveau des injecteurs ou au niveau de la rampe d'injection, au niveau du répartiteur d'admission d'air. Un système d'injection d'eau pour un moteur à combustion interne est ainsi décrit dans le document EP 2789839.

Le document FR 3077340 décrit par exemple une boucle d'injection d'eau dans laquelle un filtre est placé afin de fournir de l'eau propre sans la contrainte de disposer d'un réservoir d'eau déminéralisée. Prévoir des réserves d'eau déminéralisée s'avère fastidieux et onéreux par comparaison avec un simple remplissage avec de l'eau courante, sachant en outre que le véhicule peut circuler dans une région où l'eau déminéralisée n'est pas aisément disponible.

Un autre dispositif de filtration est connu de US 2004/112807 A1.

Un inconvénient de ce type de filtration réside dans l'encombrement lié à la pompe et au dispositif filtrant requis pour distribuer de l'eau propre. De plus, il s'avère compliqué de disposer un média filtrant près d'une voie d'aspiration d'une pompe, puisque des problèmes ou limitations peuvent alors surgir, par exemple des problèmes de stabilité du traitement et/ou une impossibilité de prélever correctement de l'eau suffisamment bas.

Dans un véhicule automobile, les variations de température peuvent causer des changements d'état de l'eau (congélation dans des conditions froides / liquéfaction si le temps est plus doux ou si un système réchauffeur est présent), ce qui nécessite en pratique de purger la pompe, typiquement à chaque arrêt du véhicule ou juste avant d'arrêter la pompe. En cas d'injection à très haut volume, le niveau d'eau pourra descendre. Il peut en aller de même en conditions froides, puisqu'il ne sera pas forcément possible de dégeler l'ensemble de la masse d'eau instantanément. Il a été aussi constaté au cours d'expériences que des bulles d'air peuvent se former dans le circuit d'eau, dans la zone (qui peut être sinueuse) située en aval de l'étage de filtration et en amont de la pompe. Ces bulles peuvent provoquer des phénomènes de cavitation et dégradent l'injection d'eau, ce qui conduit à une perte dans la maîtrise des doses d'eau liquide injectées.

Il existe donc un besoin pour mieux intégrer une ligne de distribution d'eau dans un véhicule (qui peut être déjà largement encombré), en minimisant l'apparition de phénomènes dégradant le processus d'injection d'eau.

Afin d'améliorer la situation, il est proposé un dispositif de filtration tel que défini dans la revendication 1.

Le dispositif de filtration est particulièrement bien adapté aux différents modes de la pompe. Il est permis d'accumuler plusieurs avantages, parmi lesquels la possibilité d'immerger correctement le média dans l'eau, de ne pas faire entrer trop l'air dans la partie haute de la région de filtration (ce qui limite le phénomène de création de bulles lors des phases d'amorçage/aspiration), et de pouvoir dégazer l'air passant par la pompe lors de phases de purge sans créer de grande poche d'air dans le dispositif de filtration.

Plus généralement, un échappement de l'air présent dans la région de filtration peut être aisément réalisé, ailleurs que via l'entrée située plus bas que la partie de barrage. Ceci rend l'amorçage de la pompe et la purge de la pompe compatibles avec un fonctionnement efficace du dispositif de filtration.

Typiquement, la valve anti-retour est placée du côté de la zone en amont du média filtrant, sans que cette valve anti-retour n'interfère avec l'aspiration d'eau réalisée dans une conduite d'aspiration menant à la pompe.

Selon une option, l'évent est prévu pour un dégazage dans une partie haute de la zone en amont de la filtration. En cas de purge, de l'air issu de la pompe peut traverser le média du dispositif de filtration, en sens inverse de la filtration, avant de s'échapper par l'évent lorsque cet air est surpression dans la zone d'amont.

Le dispositif de filtration peut être intégré dans le module de prélèvement d'eau, la partie de barrage formant des moyens de suppression de bulles d'air, en barrant le passage d'air en amont d'un passage inférieur de transition entre une zone de circulation d'eau filtrée adjacente au média et l'intérieur d'une paille d'aspiration (typiquement de structure tubulaire) adaptée pour remonter l'eau vers la sortie depuis le passage inférieur. L'aspiration vers un point bas correspondant au passage inférieur de liaison avec l'intérieur d'une telle paille d'aspiration rend le dispositif adapté pour un raccordement particulièrement court avec l'entrée d'aspiration de la pompe.

L'agencement peut inclure des moyens pour s'opposer à la présence de bulles d'air dans la voie d'aspiration, ces moyens comprenant par exemple une toile perméable à l'eau liquide placée en amont d'une couche de média de retenue de particules solides et/ou des poussières.

Alternativement ou en complément, les moyens pour s'opposer à la présence de bulles d'air dans la voie d'aspiration comprennent une toile perméable à l'eau liquide placée en aval d'une couche de média de retenue de particules solides et/ou des poussières.

Le raccord de connexion fluidique peut avantageusement correspondre à une canule de piquage pour connecter le dispositif de filtration sur le port d'aspiration de la pompe. Le dispositif de filtration peut en outre être directement immergé dans le milieu (eau liquide) à filtrer, sans besoin de pièce d'assemblage intermédiaire entre l'enveloppe/composant externe incluant l'ensemble de liaison et le port d'aspiration.

Cet agencement permet aussi de réaliser la filtration au plus près de la voie d'aspiration, ce qui permet un gain en compacité, par exemple en conformant le composant externe avec une géométrie concave complémentaire d'une paroi convexe servant à délimiter le compartiment de pompe. L'ensemble de liaison peut en outre être réalisé d'une pièce monobloc pour former à la fois un raccord de connexion fluidique et maintenir en position l'ensemble du dispositif de filtration dans une configuration de montage.

Dans certaines formes de réalisation, le composant externe peut être un boîtier qui comprend une paroi latérale délimitée par la pièce ou les pièces constitutive(s) de l'élément de liaison et par une coque imperméable à l'air. La paroi latérale du boîtier comprend par exemple deux extrémités opposées fermées pour ne pas laisser passer l'eau via ces extrémités à l'intérieur du boîtier. Le média filtrant présente deux extrémités latérales correspondantes fixées chacune à l'une respective des deux extrémités opposées de la paroi latérale.

On réunit les fonctions de filtration d'eau (avec séparation de poussières notamment), d'aspiration, et de prévention de formation de bulles d'air dans un espace réduit, en limitant le risque de faire circuler de l'eau contenant des bulles à la sortie du filtre et dans la pompe. Il est permis en particulier d'éviter de laisser passer et/ou de former un nombre important de bulles d'air dans la moitié inférieure du canal de circulation ascendante ou toute zone analogue de remontée d'eau filtrée située juste en amont de la sortie.

Dans divers modes de réalisation de l'agencement, le dispositif de filtration inclut une ou plusieurs des dispositions suivantes :
- la valve anti-retour présente un clapet pourvue d'une partie mobile à forme plate ou en tête de champignon.
- la partie de tête, mobile, est reliée à une tige de montage traversant la partie de barrage.
- le ou les évents sont configurés pour permettre une évacuation de gaz par le haut au moins dans une phase de remplissage en eau liquide de la région de filtration.
- le dispositif de filtration présente un raccord de connexion fluidique définissant la sortie et placé plus haut que l'entrée.
- l'extrémité supérieure du composant externe est ajourée pour définir le ou les évents qui débouchent plus haut que le raccord de connexion fluidique.
- le dispositif de filtration présente un ensemble de liaison formé dans/sur le composant externe et comprenant un raccord de connexion fluidique pour la connexion avec une voie d'aspiration d'eau liquide.
- le corps de module présente un premier compartiment intérieur, constituant le compartiment intérieur pour loger le dispositif de filtration de façon immergé dans l'eau dans un état monté du module dans un réservoir d'eau.
- le corps de module présente un deuxième compartiment intérieur pour loger tout ou partie d'une pompe d'alimentation, la voie d'aspiration d'eau liquide pouvant par exemple appartenir à la pompe d'alimentation.
- l'extrémité supérieure du composant externe (composant d'enveloppement du média filtrant) présente une face supérieure externe, depuis laquelle une projection fait saillie vers le haut pour former une surface de siège décalée par rapport à la face supérieure externe.
- une coque d'une seule pièce forme l'extrémité supérieure et une portion de la paroi latérale, dite partie de dos.
- la partie de dos s'étend à l'opposé d'un raccord de connexion fluidique formant la sortie.
- le compartiment intérieur est délimité latéralement, le long de la partie de dos, par une face intérieure étagée avec une partie supérieure et une partie inférieure, la partie supérieure étant plus éloignée de la partie de dos que la partie inférieure, sachant qu'un épaulement qui sépare ces deux parties permet de former un creux d'accumulation d'eau (du côté de la partie supérieure de la face intérieure étagée).

Dans divers modes de réalisation de l'agencement, il est prévu une ou plusieurs des dispositions suivantes :
- les moyens pour s'opposer à la présence de bulles d'air comprennent la partie de barrage.
- les moyens pour s'opposer à la présence de bulles d'air dans le raccord de connexion sont agencés en amont de la sortie formée par ce raccord de connexion fluidique.
- la partie de barrage est conçue et agencée pour permettre de laisser passer de l'eau liquide dans un canal de circulation ascendante d'eau qui s'étend en aval du média filtrant suivant le sens de filtration et qui communique avec la voie d'aspiration via la sortie (l'air pouvant entrer dans le compartiment intérieur, par exemple dans la phase de remplissage initiale en eau de ce compartiment ou dans des situations à faible remplissage du réservoir, ne va pas pouvoir pénétrer dans la région de filtration, grâce à la partie de barrage qui s'étend vers le bas jusqu'à pénétrer dans une zone de creux rétrécie/plus étroite du compartiment intérieur).
- le canal de circulation ascendante d'eau présente une entrée adjacente à ou réalisée au niveau d'un passage inférieur délimité par un bord inférieur d'une paroi de séparation qui est interposée entre le média filtrant et la sortie et qui rejoint l'extrémité supérieure,
   et dans lequel la partie de barrage permet de supprimer ou barrer le passage à des bulles d'air, au moins dans un état partiellement immergé par l'eau liquide de la partie de barrage.
- le dispositif de filtration comporte une paroi de séparation conçue en tant que cloison sensiblement verticale dans l'agencement et séparant la région de filtration d'une région d'évacuation en communication avec la sortie.
- dans le dispositif de filtration, un passage inférieur, proche du fond ou longeant le fond du composant externe, permet d'acheminer de l'eau filtrée de la région de filtration vers la région d'évacuation.
- la paroi de séparation est configurée pour obliger l'eau à remonter de façon ascendante depuis le passage inférieur au moins jusqu'à un passage supérieur débouchant à l'intérieur d'un embout tubulaire mâle qui fait partie d'un raccord de connexion fluidique.
- l'entrée est délimitée par un bord inférieur de la paroi latérale, ce bord inférieur s'étendant plus haut que le passage inférieur.
- le composant externe présente une coque réalisée d'une pièce et montée ou assemblée de façon à délimiter une ou plusieurs ouvertures en regard de l'extrémité inférieure du média filtrant pour faire entrer l'eau dans la région de filtration.
- la coque est réalisée d'une seule pièce en matériau plastique (structure monobloc).
- l'ensemble de liaison délimite une voie coudée de circulation d'eau filtrée, la voie coudée incluant un canal de circulation ascendante d'eau filtrée par le média filtrant et un canal de sortie délimité par le raccord de connexion fluidique.
- la paroi de séparation est rapportée par fixation rigide sur l'élément de liaison qui inclut le raccord, ou (alternativement) le raccord de connexion fluidique est rapporté par fixation rigide sur une pièce constitutive de tout ou partie du composant externe et incluant la paroi de séparation.
- le média filtrant présente deux faces opposées dont l'une constitue une première face définissant tout ou partie d'une zone d'amont, en amont de la filtration par le média filtrant, et l'autre constitue une deuxième face délimitant une zone d'aval en communication avec la sortie.
- la paroi de séparation est interposée entre la deuxième face et le raccord de connexion fluidique pour séparer la région de filtration du canal de remontée (canal de circulation ascendante d'eau filtrée par le média filtrant) qui communique avec la sortie.
- la paroi de séparation consiste en une pièce d'un matériau plastique (à base d'un seul polymère, copolymère ou composite).
- la paroi de séparation s'étend sur plus de 60% de la hauteur totale du média filtrant, de préférence sur plus de 60% de la hauteur totale du composant externe et sur plus de 70 ou 75% de la hauteur totale du média filtrant.
- le composant externe présente un élément de paroi concave depuis laquelle fait saillie, vers l'extérieur, le raccord de connexion fluidique où est formée la sortie.
- le composant externe peut consister en un boîtier de forme générale arquée en vue de dessous, de sorte que l'élément de paroi a une surface externe dont la section en coupe horizontale a une forme de « U » ou de « C » délimitant un espace creux à l'extérieur du composant externe.
- le raccord de connexion fluidique est tubulaire et en saillie dans l'espace creux par rapport à l'élément de paroi.
- la hauteur du composant externe est inférieure ou égale à 120 mm, de préférence inférieure ou égale à 95 mm.
- l'épaisseur moyenne du média filtrant, mesurée (typiquement horizontalement) entre ses faces opposées d'entrée et de sortie est inférieure ou égale à 15 ou 22 mm.
- la longueur développée du média filtrant, qui est délimitée entre deux terminaisons opposées et distantes (terminaisons typiquement réparties de part et d'autre du raccord de connexion) est par exemple supérieure à 80 mm et inférieure ou égale à 150 mm.
- l'élément de paroi présente intérieurement des reliefs aptes à maintenir un espacement moyen, entre le média filtrant et une face intérieure de l'élément de paroi, supérieur ou égale à 1 ou 2 mm, les reliefs présentant entre eux des espacements pour permettre une circulation descendante d'eau filtrée par le média filtrant, en direction du passage inférieur.
- le canal de circulation ascendante est délimité entre l'élément de paroi, du côté extérieur du dispositif de filtration, et la paroi de séparation, du côté intérieur du dispositif de filtration.
- le boîtier forme un logement pour le média filtrant et délimite intérieurement, avec la paroi de séparation, la région de filtration.
- la filtration est réalisée de façon centripète (ou convergente vers une même région) de sorte que la première face du média est à l'opposé de l'espace creux et présente une surface supérieure à celle de la deuxième face du média filtrant.

Il est également proposé un module de prélèvement et distribution d'eau destinée à une chambre de combustion d'un véhicule, qui est tel que défini dans la revendication 10.

La rechange du dispositif de filtration n'implique aucune intervention complexe de démontage d'un composant de pompe. Ce type de module permet de s'assurer d'une filtration efficace pendant une longue durée, par exemple en prévoyant de changer le dispositif de filtration de façon périodique, après un certain kilométrage parcouru qui peut être supérieur ou égal à 20000 ou 30000 km par exemple et/ou après un certain nombre d'années d'utilisation.

Selon une variante, il est proposé un module de prélèvement et distribution d'eau destinée à une chambre de combustion d'un véhicule, ce module étant tel que défini dans la revendication 11.

Cet agencement, compatible avec l'utilisation d'un dispositif de filtration robuste et dont l'efficacité diminue peu au cours du temps, peut optimiser la compacité, en l'absence de besoin de débattement latéral pour extraire le dispositif de filtration.

Il est aussi proposé, selon l'invention, une utilisation d'un dispositif de filtration pour permettre de filtrer de l'eau liquide et acheminer cette eau dans une voie d'aspiration d'une pompe d'alimentation, dans un état immergé du dispositif de filtration à l'intérieur d'un réservoir d'eau présent dans un véhicule à moteur à combustion interne, la pompe étant prévue faire circuler l'eau filtrée vers une chambre de combustion du véhicule, le dispositif de filtration incluant :
i) un composant externe qui présente au moins une entrée par laquelle l'eau liquide du réservoir d'eau peut atteindre une région de filtration, une extrémité supérieure et une paroi latérale qui s'étend entre l'extrémité supérieure et l'entrée ;
ii) un média filtrant entouré par le composant externe en s'étendant dans la région de filtration sous l'extrémité supérieure ;
iii) une sortie d'évacuation d'eau liquide filtrée, le média filtrant étant interposé entre l'au moins une entrée et la sortie ; et
iv) une valve anti-retour montée sur le composant externe et prévue dans une partie de barrage incluant l'extrémité supérieure et la paroi latérale ;
la valve du dispositif de filtration permettant de former une voie de dégazage lorsque de l'air circule de façon ascendante le long de la partie de barrage dans la région de filtration ou est mis sous pression dans la région de filtration.

Typiquement, l'air à évacuer provient
- du réservoir lors d'une phase de remplissage en eau de ce dernier, sachant que le dispositif de filtration est monté avant le remplissage initial de ce réservoir ;
- de la pompe lors d'une phase de purge de cette pompe.

Dans des formes de réalisation, la voie de dégazage passe par au moins un évent de la valve, situé plus haut que l'entrée. Le clapet obturant un tel évent s'étend parallèlement à la coque, par exemple perpendiculairement (horizontalement) à une tige de clapet traversant un orifice d'ancrage formé parallèlement à l'évent.

Le dispositif de filtration peut être monté à l'intérieur d'un boîtier (boîtier de module) qui est immergé dans le réservoir d'eau ou délimite une sous-partie du réservoir d'eau et qui loge aussi une partie moteur de la pompe d'alimentation.

Typiquement, le dispositif de filtration est intégré de façon compacte contre une entrée d'aspiration d'une pompe d'alimentation, la partie de barrage située autour et au-dessus du média évitant une pénétration d'air en situation de faible niveau d'eau liquide, ce qui permet d'éviter de générer des bulles ou des déséquilibres de pression préjudiciables à la qualité du flux d'eau filtré à acheminer vers la chambre de combustion, notamment au début d'un cycle de fonctionnement de la pompe.

Selon une particularité, l'eau filtrée par le média filtrant est acheminée dans le raccord de connexion fluidique formant la sortie, via une structure de paille d'aspiration qui s'étend entre un passage inférieur et un passage supérieur débouchant dans la sortie. Le passage inférieur peut être un passage de transition entre la région ou chambre de filtration et le canal de circulation ascendante formé par la structure de paille d'aspiration.

Dans des modes de réalisation, il peut être prévus deux chemins de passage :
- l'un principal par une ouverture de passage formée à l'extrémité inférieure de la structure de paille d'aspiration verticale, au niveau du ou en position adjacente au passage inférieur, afin de permettre d'acheminer de l'eau filtrée située dans un point bas du réservoir d'eau ;
- l'autre secondaire par un orifice d'équilibrage de pression situé au moins 15 mm plus haut que l'ouverture de passage, cet orifice pouvant permettre un transfert d'eau filtrée entre l'intérieur de la structure de paille et la région de filtration,
et dans laquelle la section de passage de l'ouverture de passage est supérieure à la section de passage de l'orifice, et de préférence au moins dix fois plus grande.

Ainsi, lorsque le niveau d'eau filtrée est important et que le risque de générer des différences de pressions entre l'intérieur et l'extérieur de la paille d'aspiration est élevé (par exemple en raison du débit important d'eau sortant de la face aval du média filtrant et du faible espacement pour circuler vers le point d'aspiration de la paille), un équilibrage de pression peut se réaliser simplement en déversant de l'eau filtrée dans la paille par un accès plus haut distinct de son entrée d'aspiration.

On décrit maintenant brièvement les figures des dessins.
[Fig. 1] La figure 1 est une vue en coupe d'un dispositif de filtration conforme à l'invention, illustrant une voie de circulation d'eau filtrée formant un coude du côté de la sortie du dispositif.
[Fig. 2] La figure 2 est une vue en perspective du dispositif de filtration de la figure 1, montrant un ensemble de liaison du dispositif intégrant un élément de paroi et relié à une coque pour délimiter une chambre ou région de filtration.
[Fig. 3] La figure 3 est une vue éclatée du dispositif de la figure 1.
[Fig. 4A] La figure 4A montre un dispositif de filtration dans un compartiment distinct du compartiment recevant la pompe d'alimentation, au cours d'un remplissage en eau avec l'air chassé progressivement par utilisation d'une valve anti-retour placée du côté d'une extrémité supérieure du corps externe du dispositif.
[Fig. 4B] La figure 4B est une vue schématique similaire à la figure 4A, montrant l'état de remplissage en eau dans la région de filtration, après un échappement complet d'air via une valve du dispositif de filtration.
[Fig. 4C] La figure 4C montre l'actionnement de la pompe réalisé à la suite de la situation illustrée sur la figure 4B.
[Fig. 4D] La figure 4D est une autre vue schématique permettant d'illustrer la fin du remplissage en eau, dans une situation compatible avec une injection d'eau par la pompe dans une chambre de combustion, l'air du conduit d'aspiration à la sortie du dispositif de filtration ayant été chassé via l'actionnement de la pompe.
[Fig. 5A] La figure 5A est une vue similaire à celles des figures 4A à 4D dans une situation de complète immersion du dispositif de filtration, illustrant le démarrage d'une purge visant à évacuer l'eau de la pompe.
[Fig. 5B] La figure 5B est une vue illustrant un échappement d'air hors de la région de filtration, permettant à l'eau de remplir la chambre ou région de filtration à l'arrêt du mode de purge de la pompe.
[Fig. 5C] La figure 5C est une autre vue schématique montrant le raccordement entre le dispositif de filtration et la pompe, à l'issue de la purge, avec le média de filtration immergé et la valve d'échappement d'air à l'état fermé.
[Fig. 6] La figure 6 illustre un module de prélèvement d'eau pour une utilisation dans un véhicule motorisé, cette figure 6 omettant le dispositif de filtration, afin de montrer un exemple de prise de connexion femelle pouvant coopérer avec le raccord mâle formant la sortie du dispositif de filtration, en permettant un montage amovible du dispositif de filtration.
[Fig. 7] La figure 7 est une vue de face d'un couvercle fermant un compartiment de réception d'une pompe d'alimentation et définissant une voie d'aspiration avec une réduction progressive de section depuis une entrée d'accès à la voie d'aspiration.
[Fig. 8] La figure 8 est un schéma fonctionnel d'un système pour véhicule permettant l'injection d'eau dans une chambre de combustion du moteur du véhicule, illustrant ici la position du module de prélèvement d'eau dans un réservoir d'eau.
[Fig. 9] La figure 9 est une vue en perspective du côté intérieur d'un élément de liaison formant une partie de l'enveloppe ou du composant externe du dispositif de filtration, ici dans une option avec un canal de circulation ascendante délimité intérieurement par une paroi de séparation réalisée d'une pièce (monobloc) avec un élément de paroi externe complémentaire de la coque.

Ci-après un exposé détaillé de plusieurs modes de réalisation de l'invention assorti d'exemples et de référence aux dessins. Sur les différentes figures, des références identiques indiquent des éléments identiques ou similaires.

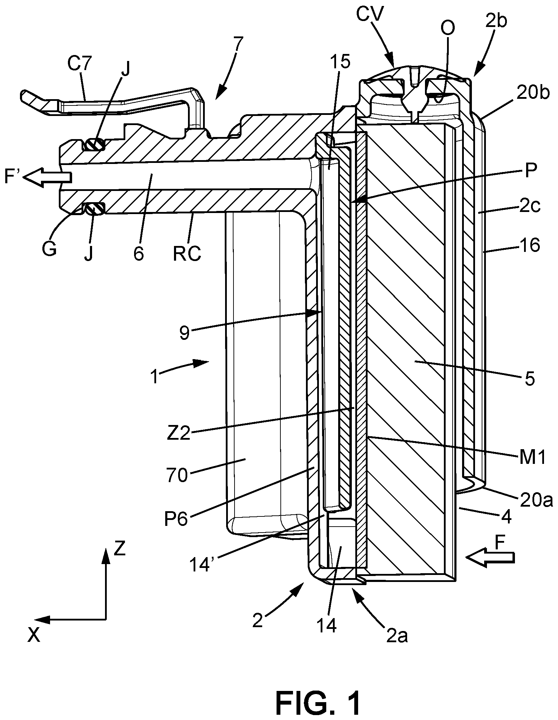

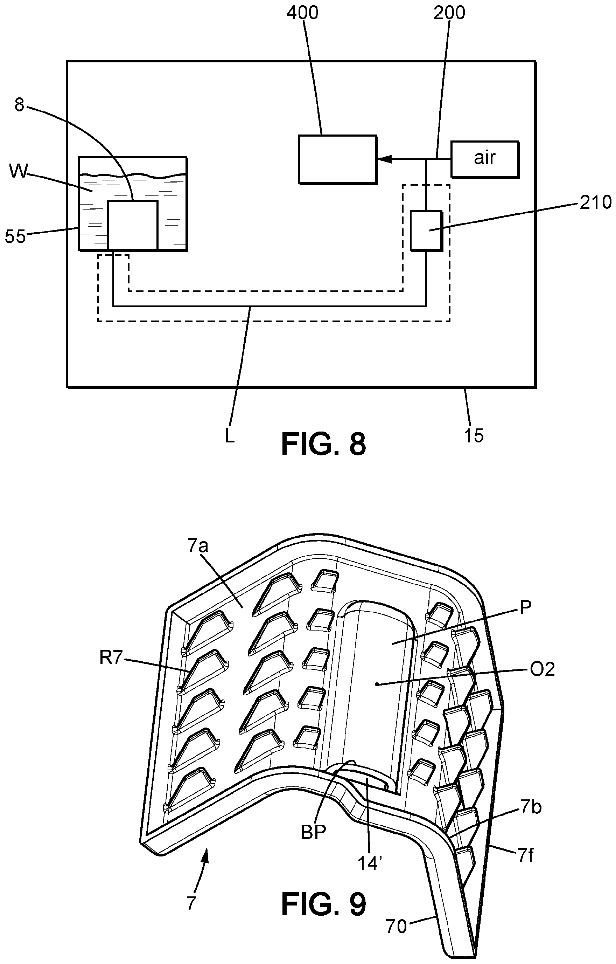

En référence aux figures 1, 4A à 5C et 8, il est présenté un agencement de filtration permettant de filtrer de l'eau liquide dans un réservoir 55 (visible sur la figure 8) présent dans un véhicule motorisé. Comme illustré plus particulièrement sur la figure 8, une injection d'eau est prévue au niveau du moteur, cette eau étant injectée typiquement dans une ligne 200 d'alimentation en air pour être distribuée de façon dosée dans la chambre de combustion 400. Le liquide filtré est typiquement de l'eau ou une solution liquide aqueuse permettant cette distribution via un injecteur 210 spécifique. Dans ce qui suit, il faut comprendre l'expression « eau » comme désignant ce type de liquide.

Sur la figure 8, on peut voir que l'eau W stockée dans un réservoir 55 peut être prélevée par un module 8 de prélèvement qui intègre un étage de filtration. Comme décrit ci-après, un dispositif de filtration 1 peut être intégré dans un tel réservoir 55 de façon compacte, en amont de l'aspiration, de sorte que la ligne de distribution L prévue entre le réservoir 55 et l'injecteur 210 puisse acheminer de l'eau liquide W filtrée qui ne nécessite plus de traitement de filtration. Optionnellement un chauffage de l'eau peut aussi être réalisé du côté du réservoir 55.

Dans des formes de réalisation compatibles avec un fonctionnement dans des régions froides, le module de prélèvement 8 est adapté pour permettre une mise à l'arrêt de la pompe d'alimentation 80 et vider les volumes d'eau dès que le moteur du véhicule 15 s'éteint. Ceci permet d'éviter les casses de pièces (notamment en hiver ou lors de nuits froides) à cause du gel. Il y a dans ce cas un amorçage (remplissage avec le volume d'eau) à chaque démarrage du véhicule 15. Lors de l'amorçage de la pompe d'alimentation 80, la pompe est typiquement à l'arrêt. Une structure à double boucle peut être prévue pour permettre une vidange de la ligne de distribution L. Pour cela, une boucle d'amorçage et une boucle pour faire l'injection d'eau dans le ou les injecteurs sont par exemple utilisées.

La figure 1 illustre un dispositif de filtration 1 pouvant être disposé verticalement, parallèlement à la direction d'axe Z. Sur cette figure 1, on a également représenté la direction d'axe X suivant laquelle un flux F' d'eau filtrée peut sortir du dispositif de filtration 1. Afin d'optimiser l'encombrement de ce dispositif de filtration 1, une configuration courbée, ici sensiblement parabolique, peut-être préférée, avec le plan XZ qui correspond par exemple à un plan médian séparant le média filtrant 5 en deux moitiés et passant par un raccord de connexion fluidique RC par lequel sort le flux F' d'eau filtrée.

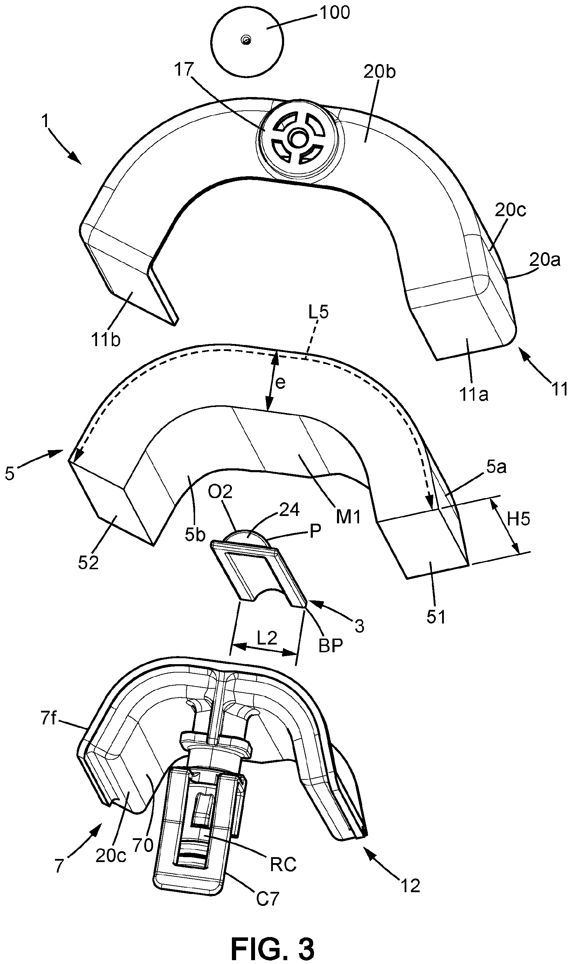

Comme bien visible sur la figure 3 par exemple, une telle configuration sensiblement parabolique permet de disposer d'une première face 5a d'entrée plus grande que la deuxième face 5b de sortie dans le média filtrant 5 courbé. En outre, l'eau filtrée peut converger vers un canal de section déjà réduite, placé juste avant le raccord RC, ce qui rend le raccord compatible avec une connexion directe avec un port d'aspiration d'une pompe d'alimentation 80. Plus généralement, le dispositif de filtration 1 peut présenter un encombrement réduit en épousant la forme externe d'un compartiment C2 où est logée la pompe d'alimentation 80. Dans certaines options, un chauffage de l'eau peut aussi être réalisé dans une région où la section de passage pour le flux F' d'eau filtrée est réduite. Dans des formes de réalisation, il peut être prévu de chauffer l'eau au moins dans une zone voisine d'une ou plusieurs entrées du dispositif de filtration 1.

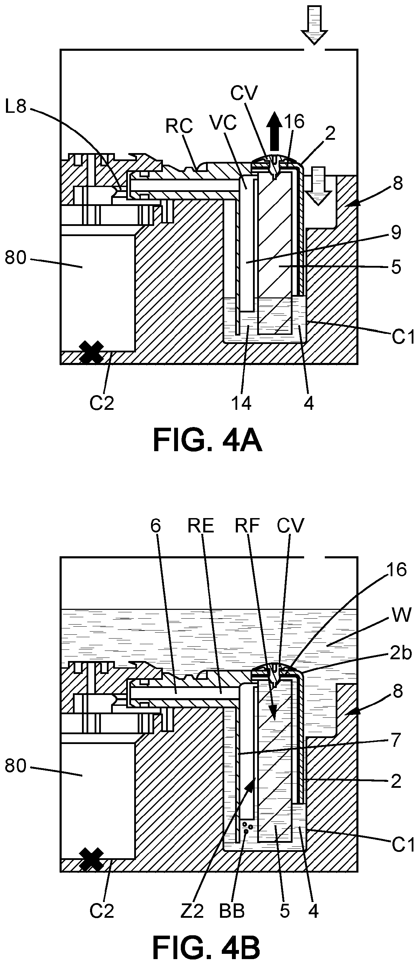

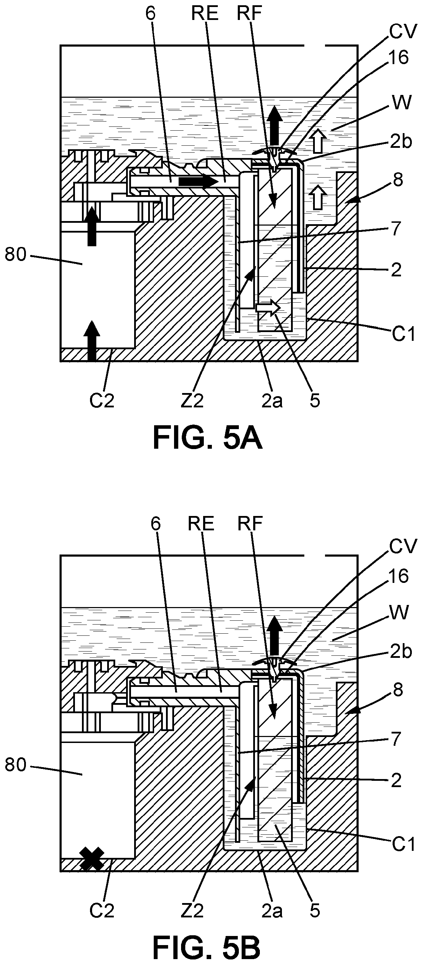

Les figures 4A à 4D et 5A à 5C montrent un premier exemple de compartiment C1, délimité typiquement par un corps 18 du module 8 de prélèvement, pouvant loger le dispositif de filtration 1 tout en laissant l'eau W circuler librement vers le fond ou partie basse analogue de ce compartiment C1. En pratique, le dispositif de filtration 1 peut-être monté dans le circuit de prélèvement et distribution d'eau (incluant la ligne L montrée sur la figure 8) lors d'une étape d'assemblage, en connectant le raccord RC de connexion fluidique du dispositif de filtration 1 avec une entrée E1 d'une pompe d'alimentation 80. L'ensemble pompe et filtre peut appartenir au module 8 de prélèvement d'eau qui est ici placé dans le réservoir 55. Cet ensemble est par exemple déjà en place dans le réservoir 55 lors d'une étape de remplissage en eau de ce dernier.

Dans la réalisation non limitative des figures 1 à 3, le dispositif de filtration 1 présente un composant externe 2 pour délimiter une chambre ou région de filtration RF. Le raccord RC peut-être un organe mâle de connexion, en formant un embout tubulaire ou canule qui s'étend autour d'un axe d'insertion qui est parallèle à l'axe X. Dans ce mode de réalisation, le composant externe 2 présente une extrémité inférieure 2a pouvant former un fond, une extrémité supérieure 2b et peut se dresser verticalement dans un état connecté à la pompe 80. Ici, la direction d'insertion peut être sensiblement horizontale, ou plus généralement perpendiculaire à l'extension (généralement verticale) du composant externe 2 entre son fond ou extrémité inférieure 2a et son extrémité supérieure 2b.

Le raccord RC peut former une sortie 6 pour acheminer de l'eau filtrée par le média filtrant 5 du dispositif de filtration 1 vers la pompe d'alimentation 80. Ce raccord RC s'insère ici dans un port de connexion fluidique complémentaire, par exemple réalisé sous la forme d'une prise femelle PF.

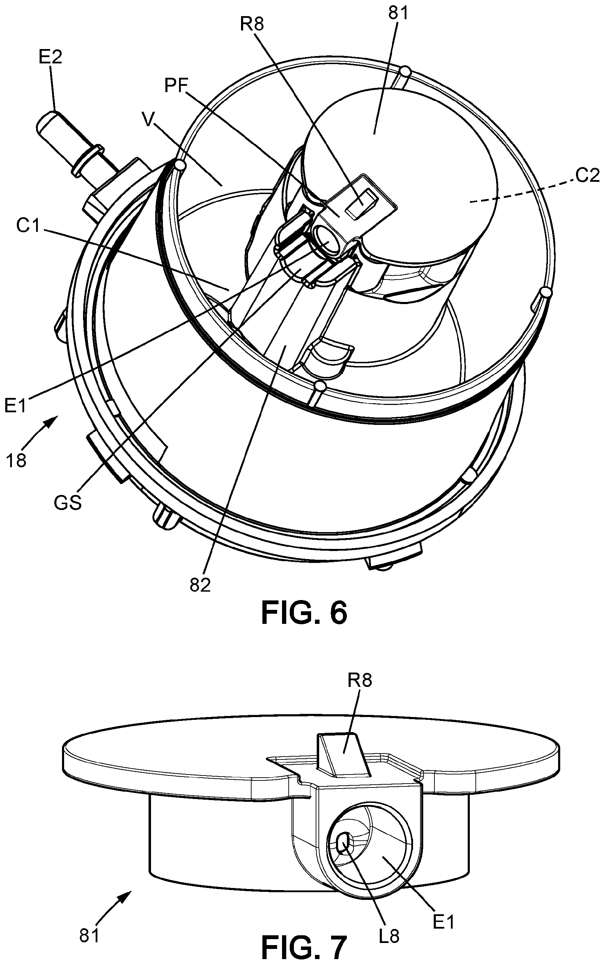

On décrit ci-après un exemple de connexion et d'intégration du dispositif de filtration 1. En référence aux figures 6 et 7, la prise femelle PF peut être prévue dans une partie supérieure d'un compartiment C2 pour loger la pompe d'alimentation 80. On comprend que le module 8 de prélèvement d'eau peut inclure un premier compartiment C1 pour le dispositif de filtration 1 et un deuxième compartiment C2 pour loger la pompe d'alimentation 80. On prévoit ici un corps de pompe 18 ayant une paroi latérale qui permet de délimiter un volume intérieur V dans lequel sont rassemblés différents composants du module 8. Le filtre ou dispositif de filtration 1 et la pompe d'alimentation 80 font partie de ces composants intégrés intérieurement dans le corps de pompe 18, dans le volume intérieur V.

Afin de sécuriser la connexion fluidique permettant de faire circuler l'eau filtrée par le dispositif de filtration 1 vers la pompe d'alimentation 80, le composant externe 2 est pourvu d'un organe C7 de fixation, permettant de maintenir le raccord RC dans un état d'insertion dans la prise femelle PF correspondant au port de connexion fluidique formant l'entrée E1. Cet organe C7 est par exemple un clip qui est accessible par le dessus des compartiments respectifs C1 et C2 pour le dispositif 1 et la pompe 80, ce clip pouvant s'étendre au-dessus d'un couvercle 81 de fermeture du deuxième compartiment C2 comme illustré sur les figures 4A à 7.

Ici, pour permettre une fixation amovible, on peut prévoir que le clip ou organe C7 de fixation similaire présente une fente F8 dans laquelle peut s'insérer un ergot saillant R8 formé sur le boîtier de la pompe d'alimentation 80, par exemple sur le couvercle 81 tel qu'illustré sur la figure 7. L'ergot R8 est ici saillant vers le haut. En variante on peut prévoir de réaliser l'organe de fixation C7 sous la forme d'une patte élastique munie d'un ergot saillant vers le bas est apte à s'engager dans un logement avec surface de butée prévu sur le boîtier de la pompe d'alimentation 80. Plus généralement tout type de fixation amovible peut-être prévu, par emboîtage élastique, déformation d'un organe élastiquement déformable rendue réversible par tout organe de déverrouillage approprié, ou fixation impliquant un organe additionnel tel qu'une vis, boulon ou similaire. Avantageusement dans l'exemple illustré, on peut se passer d'organe de fixation perdable, l'organe C7 étant inséparable du raccord RC, et par exemple intégralement formé (monobloc) avec un élément de liaison 7 qui fait partie du corps/composant externe 2 du dispositif de filtration 1.

En référence à l'exemple de la figure 6, la paroi latérale du corps de pompe 18 est espacée d'une partie de dos du dispositif 1. Cet espacement est important (en dépassant par exemple l'épaisseur e du média filtrant 5), de sorte qu'il existe un débattement suffisant pour permettre, après un désencliquetage de l'organe C7, de faire coulisser en arrière le raccord RC hors de la prise femelle PF. Ce mouvement de retrait peut être réalisé avec un guidage en coulissement (sensiblement horizontal dans cet exemple) permis ici par une surface GS de support et de guidage placée adjacente à l'entrée E1 et sur laquelle peut reposer une surface inférieure de la canule ou embout constituant la sortie 6 du dispositif de filtration 1. Le mode de fixation peut être réalisé différemment dans certaines options, par exemple en prévoyant un débouché vertical du raccord RC (que celui-ci soit coudé ou non du côté de son extrémité libre) afin de s'affranchir de l'espace de débattement horizontal.

Un exemple de réalisation du dispositif de filtration 1 va être à présent décrit plus particulièrement en référence aux figures 1, 2, 3, 4D et 5A.

Le dispositif de filtration 1 est adapté pour être immergé dans l'eau liquide W qui remplit le réservoir 55. Pour cela, le composant externe 2 peut être dépourvu de canule d'entrée et présente une paroi, qui forme ici la partie de dos du composant externe 2. En référence à la figure 3, la partie de dos peut consister en une coque 11, ici de préférence non ajourée à l'exception d'ouvertures O obturées par le clapet d'une valve CV de type anti-retour. Il est ainsi permis de loger et maintenir le média filtrant 5 dans une conformation arquée. Plus généralement, le média filtrant 5 est rendu solidaire du composant externe 2 de façon à présenter deux faces opposées 5a, 5b. Le média 5 inclut une ou plusieurs couches composées chacune d'un matériau de filtration qui s'étendent d'une première terminaison 51 à une deuxième terminaison 52 du média 5, entre ces deux faces opposées 5a, 5b. La longueur développée L5 du média 5 se mesure entre ces deux terminaisons 51, 52, comme visible sur la figure 3.

En référence à la figure 3, l'épaisseur e du média filtrant 5 peut être mesurée entre les deux faces opposées 5a; 5b. On peut noter que le média filtrant 5 est typiquement plus haut qu'épais, l'épaisseur e étant la plus petite des trois dimensions du média (plus petite que la hauteur H5 du média 5 et plus petite que sa longueur développée L5). La hauteur H5 peut être inférieure ou égale à 120 mm, de préférence inférieure ou égale à 70 ou 80 mm. On comprend que cette hauteur H5 peut être typiquement au moins 8 huit fois supérieure à la hauteur définie dans un passage inférieur 14 (visible sur la figure 1) où l'eau filtrée peut être aspirée via une structure de paille (P6, P) débouchant à sa partie haute (via un passage supérieur 15) sur la sortie 6.

Parmi les deux faces opposées du média filtrant 5, l'une constitue une première face 5a définissant tout ou partie d'une zone d'amont Z1, en amont de la filtration par le média filtrant 5, et l'autre constitue une deuxième face 5b délimitant une zone d'aval Z2 en communication avec la sortie 6. Le composant externe 2 peut être ajouré du côté d'une face inférieure ou éventuellement dépourvu de face inférieure. Dans ce composant externe 2, il est prévu une face supérieure et une face latérale qui sont non ajourées. Ainsi, du côté de la première face 5a (face latérale d'entrée) du média filtrant 5, l'eau ne peut arriver que par le bas via une entrée basse 4, bien visible sur la figure 1.

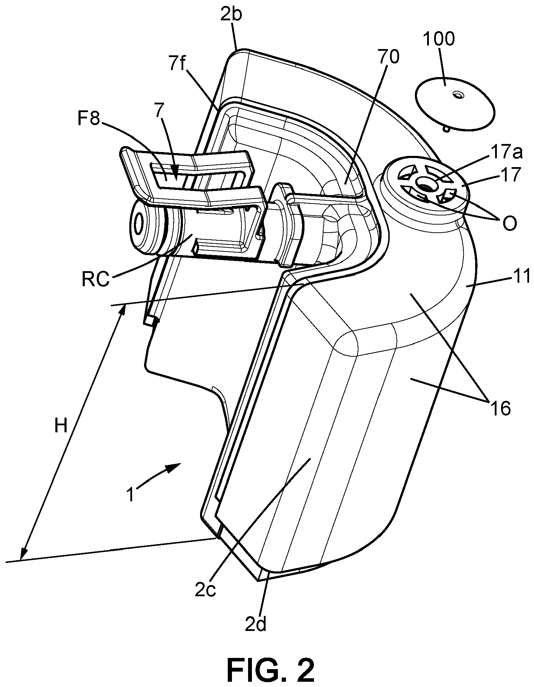

En référence aux figures 2 et 3, la coque 11 est une pièce d'enveloppement pourvue :
- d'un flasque supérieur de recouvrement de la face supérieure du média 5, ce flasque supérieur présentant optionnellement des ouvertures O (ouvertures supérieures), qui sont de préférence fermées par au moins un clapet ;
- une paroi verticale qui peut être courbée en formant la face extérieure de la partie de dos, cette paroi verticale s'étendant verticalement du flasque supérieur vers le bas, jusqu'à un bord inférieur 2d, en empêchant l'eau liquide de rejoindre la première face 5a sans passer par la ou les ouvertures 4 situées sous le bord inférieur 2d ; et
- deux parties terminales de paroi 11a, 11b, formant des extrémités de la coque 11 suivant le sens de la longueur du média 5 et bouchant respectivement l'accès par l'extérieur aux terminaisons 51, 52.

Dans cet exemple, l'eau traversant le média 5 ne peut pas déboucher via les terminaisons 51, 52, celles-ci étant typiquement collées ou fixées d'une autre manière, de façon étanche, aux parties terminales de paroi 11 a, 11 b. De plus la coque 11 est complétée par une pièce 12 de fermeture. Une partie de bordure B11 de la coque 11, délimitant la face d'insertion F11, peut aussi servir de support de fixation étanche pour le média 5, afin de supprimer toute voie de dérivation entre la zone d'amont Z1 la zone d'aval Z2. D'une manière générale, le dispositif de filtration 1 peut présenter un média filtrant 5 conçu et configuré pour filtrer la totalité de l'eau arrivant jusqu'à la sortie 6 (cette eau filtrée devant traverser la deuxième face 5b dans l'exemple illustré). La configuration avec une partie profilée de la coque 11, à section en U, permet à trois faces différentes du média 5 (la face latérale 5a et les faces de dessous et de dessus) de définir des faces d'entrée pour l'eau liquide W. Plus généralement, on préfère utiliser au moins deux faces distinctes du média 5 pour l'acheminement de l'eau liquide W dans la région de filtration RF.

Comme bien visible sur la figure 3, la forme externe et les dimensions du média 5 peuvent être adaptées pour remplir de façon ajustée un volume interne de la coque 11. La pièce 12 de fermeture participe à obturer d'un côté ce volume interne. La pièce de fermeture 12 peut être notamment du genre illustré en bas de la figure 3 et associée à une autre pièce 3 interne pour former la paille (P6, P) d'aspiration.

La coque 11 et l'élément de liaison 7 peuvent délimiter une face périphérique latérale 20c en forme de croissant, entourant ici le média 5. Ils peuvent aussi former, après assemblage, les faces horizontales opposées 20a, 20b qui forment chacune un « C » relativement épais (pour permettre de loger le média 5).

Le composant externe 2 présente, entre son extrémité inférieure 2a et son extrémité supérieure 2b, une paroi latérale 2c. Il est prévu, pour le passage d'eau dans la région de filtration RF lors du fonctionnement du dispositif de filtration 1, au moins une entrée 4 située sous ou en partie basse de la paroi latérale 2c.

C'est par une telle entrée 4 que l'eau liquide W du réservoir d'eau peut atteindre la région de filtration RF, l'extrémité supérieure 2b et la paroi latérale 2c formant une partie 16 de barrage qui empêche l'accès à la région de filtration RF au-dessus de ladite entrée 4. Plus généralement, le dispositif de filtration 1 comporte ici :
- un composant externe 2, de préférence rigide, disposant de la paroi latérale 2c typiquement imperméable à l'eau ;
- une entrée basse 4 ou plusieurs accès inférieurs à la région de filtration RF ; et
- le média filtrant 5, fixé au ou maintenu dans le composant externe 2 en s'étendant dans la région de filtration RF, typiquement entre un fond ou extrémité inférieure 2a et l'extrémité supérieure 2b.

Pour faciliter des modes de fonctionnement qui précèdent et/ou suivent une phase de fonctionnement du dispositif de filtration 1 pour alimenter la pompe 80 en eau propre, le dispositif de filtration 1 peut disposer de moyens d'équilibrage en pression par échappement d'air, présents dans la région de filtration RF, ailleurs que via l'entrée 4 située plus bas que la partie de barrage 16.

En référence aux figures 1 à 3, le dispositif de filtration 1 inclut une valve CV de type anti-retour, rendant accessible au moins un évent O ici formé dans la partie de barrage 16. En cas de surpression du côté de la région de filtration RF, par exemple si une poche d'air est en cours de formation au-dessus de la masse d'eau présente dans la région de filtration RF délimitée supérieurement par la partie de barrage 16, alors un clapet mobile de la valve CV est déplacé pour permettre un dégazage.

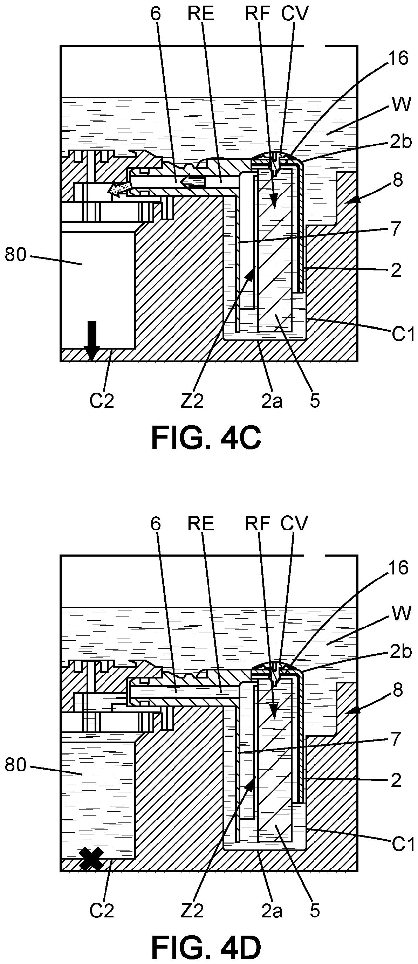

De préférence, chaque évent O est obturé par défaut par un clapet, ici un clapet 100 de la valve CV. Cette obturation permet un remplissage optimal de la région de filtration RF en eau. En référence aux figure 4A, 4B, 4C et 4D, on peut voir l'évolution du niveau de remplissage permis avec la partie de barrage qui s'oppose à l'entrée d'air ailleurs que par l'entrée 4.

En référence aux figure 4A et 8, le remplissage du réservoir 55 commence et l'air initialement présent dans la région de filtration RF peut s'échapper par l'ouverture de la valve CV, ici placée dans l'extrémité supérieure du composant externe 2, dans un point haut de la partie de barrage 16 imperméable à l'air. Chaque évent O peut définir un accès entre la région de filtration RF et une zone externe au dispositif de filtration 1, sans passer par l'entrée où l'eau est déjà présente jusqu'au niveau du bord 2d (bord 2d visible aussi sur la figure 2). La pompe 80 contient encore de l'air à la fin du remplissage du réservoir 55, comme illustré sur la figure 4B, ce qui n'est pas le cas de la région de filtration RF dans laquelle s'étend le média 5. La surface utile du média 5 pour la filtration peut être égale à la surface totale, en l'absence de poche d'air significative piégée sous la partie 16 de barrage.

En référence aux figures 1 et 4B, on comprend que la paille d'aspiration (P6, P) peut rester, au moins en partie, remplie d'air tant que la pompe n'est pas chargée en eau. L'air initialement présent ne peut pas s'échapper de la pompe 80 lorsque cette dernière est inactive (fermée).

Un amorçage de la pompe 80 implique une aspiration d'air, comme illustré sur la figure 4C, en évacuant par conséquent l'air qui restait dans la sortie 6 et dans le canal 9 de circulation ascendante, typiquement formé par une paille d'aspiration (P6, P). Les flèches montrées sur la figure 4C illustrent l'évacuation de cet air. Après cette situation transitoire, une fois l'air complètement évacué, on atteint la situation finale illustrée sur la figure 4D. La pompe 80 est prête pour initier une injection d'eau vers la chambre de combustion interne.

Dans des formes de réalisation, la valve CV présente un clapet 100 qui est monté dans un orifice d'ancrage 17a, comme bien visible sur la figure 2. Un tel clapet 100 est par exemple conçu en matériau élastiquement déformable, par exemple en silicone, élastomère, caoutchouc synthétique. Optionnellement, ce matériau permet de présenter une partie d'obturation qui présente une flexibilité, cette partie d'obturation pouvant être amincie par comparaison à une partie de tige faite du même matériau. La partie d'obturation peut présenter ou être inclue dans une forme de tête de champignon. Un creux central, dans le prolongement supérieur de la tige, peut être prévu pour accentuer l'effet de déformation élastique de la partie d'obturation. Une forme générale annulaire peut être éventuellement prévue pour réaliser la partie d'obturation.

La partie de tige s'étend, depuis l'extérieur où elle se raccorde à la partie d'obturation du clapet 100, au travers de l'orifice 17a et peut présenter, du côté de la zone d'amont Z1 (dans la région/chambre de filtration RF) au moins un renflement, bourrelet ou projection en saillie radialement vers l'extérieur, participant à un effet d'ancrage du clapet 100 pour le maintenir solidaire de la coque 11 ou autre région (région de siège) adaptée de la partie 16 de barrage.

Le clapet 100 peut présenter une forme de disque flexible reliée à l'extrémité d'une partie de tige. Dans certaines options, le sommet du clapet 100 peut être décollé/espacé de la région de siège, de sorte que la tête de clapet qui inclut la partie d'obturation est creuse/creusée en partie, éventuellement en ayant une forme de cloche (ou coupelle inversée) plus ou moins bombée. Un effet charnière, procuré au niveau d'une région de pliage annulaire (charnière élastique pouvant être obtenue par rétrécissement local de matière), permet à cette partie d'obturation de se soulever de la surface de siège en cas de surpression du côté plus en amont. Un effet de rappel élastique permet un retour à la conformation d'obturation dès que la surpression locale sous la coupelle formée par la partie d'obturation n'est plus suffisante. Plus généralement, l'obturation de plusieurs ouvertures/évents O par une seule pièce, élastiquement déformable et à partie simple d'obturation, est applicable à d'autres modes de réalisation pour réaliser un dégazage s'appliquant au haut de la région de filtration RF.

Pour optimiser l'effet de dégazage, un groupe de plusieurs ouvertures ou évents O peut être distribué, par exemple de façon annulaire, autour de la tige du clapet 100. Dans le cas illustré sur les figures 1 à 3, il est prévu ainsi au moins trois ou quatre évents O permettant à l'air de passer au travers de la partie 16 de barrage (barrage à l'eau et également barrage à l'air). La partie d'obturation peut obturer simultanément les évents O du même groupe. Le clapet 100 peut être réalisé d'une seule pièce, notamment lorsqu'il présente une forme à tête de champignon ou autre forme permettant un effet charnière comparable.

Lorsque plusieurs évents sont associés à une même partie d'obturation mobile d'un clapet 100, ceci permet de diviser/répartir le flux de dégazage dans plusieurs zones séparées sans ajouter un clapet pour chaque ouverture de dérivation. Plus généralement, le clapet 100 peut éventuellement être formé d'une seule pièce, en étant clipsé dans un puits ou une ouverture d'ancrage 17a prévue dans la structure de support/montage du média filtrant 5. Cette ouverture d'ancrage 17a peut être distincte des ouvertures/évents O, qui sont de préférence réparties de façon régulière autour de l'ouverture d'ancrage 17a où est typiquement reçue une partie de tige ou autre organe d'insertion du clapet 100.

Bien qu'on ait représenté d'un orifice d'ancrage 17a prévu dans l'extrémité supérieure 2b, qui délimite par le haut la zone d'amont Z1, adjacent à au moins un évent O recouvert par la partie mobile du clapet 100, d'autres localisations et/ou montages sont prévus dans des alternatives de construction. L'orifice d'ancrage 17a peut être formé dans une projection 17 en saillie depuis la partie 16 de barrage. Le siège de la valve CV est formé par exemple par la face supérieure de cette projection 17, où sont situés les évents O.

L'exemple d'une projection 17 en saillie vers le haut depuis la face supérieure externe du composant externe 2 est non limitatif. Afin de ne pas interférer avec la zone d'aspiration prévue dans la zone d'aval Z2, le ou les évents O débouchent de préférence tous dans la zone d'amont Z1.

Dans des variantes de réalisation, les évents O débouchent dans une zone intermédiaire située entre deux couches de filtration. C'est par exemple le cas lorsqu'une toile T, éventuellement analogue à celle montrée sur la figure 1, est placée le long de la partie de dos appartenant à la paroi latérale 2c, entre la face 5a du média 5 et la paroi latérale 2c servant à délimiter la ou les entrées 4.

Dans d'autres variantes, il peut être prévu un effet de rappel élastique exercé par une pièce additionnelle, par exemple un ressort ou autre pièce à effet de rappel. Le cas échéant, la partie de tige peut guider un ressort, de préférence un ressort hélicoïdal. Plus généralement, on comprend que l'action de rappel s'exerce à l'encontre de la force de pression exercée par l'intérieur sur la partie mobile du clapet 100, tout comme dans la conception à une pièce du clapet 100.

Par ailleurs, on comprend que deux clapets 100 peuvent être prévus dans certaines options, distribués ou non dans des valves CV distinctes. Les clapets sont typiquement agencés en parallèles, en étant montés sur la même paroi formant la partie 16 de barrage. Dans une variante, deux clapets sont agencés en série, un compartiment intermédiaire ou sas de circulation d'air étant formé entre deux parois successives qui sont respectivement équipées d'une valve CV anti-retour.

Plus généralement, chaque clapet 100 peut être intégré de diverses façons, avec éventuellement une flexibilité de matériau. La configuration du clapet permet un effet anti-retour, par sa conception intrinsèque ou par son montage sollicité par un élément de rappel.

Un exemple de processus de purge de la pompe 80 va être à présent décrit en référence aux figures 5A à 5C. Ce type de processus peut être réalisé après une phase de fonctionnement de la pompe 80, phase de fonctionnement au cours de laquelle le média 5 a permis de filtrer l'eau W en utilisant de préférence la totalité de sa surface utile.

La purge correspond à une mise sous pression de la pompe 80, par injection d'air, un flux d'air circulant par conséquent dans le dispositif de filtration 1 (en sens inverse) en étant introduit via la sortie 6 formée par le raccord RC. Les flèches en noir sur la figure 5A illustrent la circulation de cet air au travers de la région de filtration RF, via la zone d'aval Z2 puis le média 5 avant de rejoindre l'extérieur du dispositif 1, en passant par le ou les évents O libérés par le clapet 100 de la valve CV. La partie 16 de barrage guide l'air de façon ascendante dans la région de filtration RF. La partie de dos appartenant à la paroi latérale 2c peut être verticale et/ou dépourvue de portion horizontale contre laquelle de l'air pourrait être piégé.

On comprend que le ou les évents O peuvent présenter une utilité aussi bien pour les phases d'amorçage que pour les phases de purge, dès lors que le média 5 filtrant est enveloppée sinon de façon imperméable à l'ai aussi bien par le dessus que sur le côté latéral, à l'exception de l'entrée 4 qui se situe dans le bas du compartiment intérieur C1 pour loger le dispositif de filtration 1.

La purge évacue l'eau de la pompe 80, ce qui la préserve des risques liés au gel de la pompe. Après l'injection d'air, comme illustré sur la figure 5B, l'effet d'équilibrage/compensation permet à l'air sous pression de continuer de s'échapper via le ou les évents O, chaque soupape ou valve CV étant dans un état ouvert. Lorsque le réservoir 55 est suffisamment plein, ce phénomène permet à l'eau W de pousser et chasser l'air dans la région de filtration RF, malgré la partie 16 de barrage.

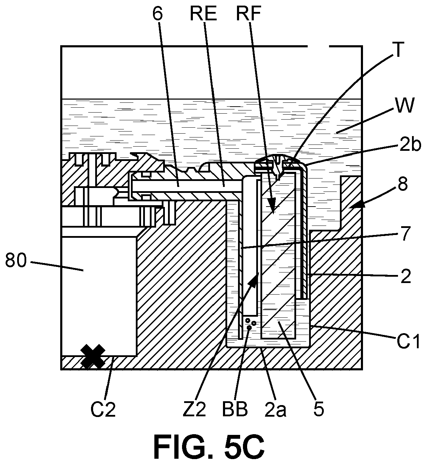

La figure 5C illustre l'état final du dispositif de filtration 1, à l'état équilibré obtenu après la purge, par exemple à l'arrêt du véhicule. Dans cette situation finale, le clapet de la valve CV obture à nouveau les évents car il n'y a plus de poche d'air. Ainsi le média filtrant 5 est à nouveau en capacité d'être utilisé avec le maximum de sa surface utile en contact avec de l'eau. Hormis la paille remplie d'air et la sortie 6 dans la zone d'aval Z2, le dispositif de filtration 1 est à nouveau rempli d'eau (média 5 pleinement immergé

Plus généralement, on comprend que, en cas de purge, de l'air issu de la pompe 80 peut traverser le média 5 du dispositif de filtration 1, en sens inverse de la filtration, avant de s'échapper par l'évent O lorsque cet air est surpression dans la zone d'amont Z1 (la surpression en zone Z2 implique également un état de surpression en zone Z1).

Le composant externe 2 peut se décomposer en au moins deux parties soudées l'une à l'autre ou clipsées ensemble. Dans l'exemple des figures 1 à 3, le composant externe 2 inclut la coque 11 et une pièce 12 incluant l'élément de paroi 70 complétant le côté ouvert de la coque 11 (côté ouvert opposé à la partie de dos imperméable à l'air) de sorte que le liquide filtré par la face 5b s'écoule le long d'une face interne de l'élément de paroi 70 avant de rejoindre la sortie 6 intégrée en tant que canule qui fait saille vers l'extérieur, ici selon la direction d'axe X. La canule constitue ici un raccord RC de connexion fluidique mâle, qui peut optionnellement recevoir un joint torique J ou joint technique annulaire similaire, par exemple en étant logé dans une gorge annulaire G délimitée près de l'extrémité libre de la canule.

Dans une variante, comme par exemple dans le cas de la figure 9, une partie de base P6 pouvant être formée d'une pièce avec le raccord de connexion fluidique RC, peut aussi faire partie du composant externe 2, en étant rapporté sur l'élément de paroi 70 (qui forme à lui seul la pièce de fermeture de la face F11, dans le cas illustré sur la figure 9).

L'élément de paroi 70 est optionnellement concave (vu de l'extérieur) lorsque le compartiment C1 pour le dispositif 1 s'étend le long d'une partie de boîtier tubulaire de la pompe d'alimentation 80. Le raccord RC fait saillie, vers l'extérieur, depuis cet élément de paroi 70 ou depuis cet élément complété par la partie de base P6. Le raccord RC peut s'appuyer sur une surface GS de support de et de guidage avant de se connecter de façon étanche à la prise femelle PF. Ainsi, la sortie 6 peut directement déboucher vers et faire face à une voie L8 d'aspiration appartenant à la pompe d'alimentation 80, comme visible sur les figures 4 et 5 (voir également la figure 7 - raccordement direct à la voie L8).

On comprend que le composant externe 2 peut consister en un boîtier de forme générale arquée, avec une forme sensiblement parabolique en vue de dessous ou de dessus, de sorte que l'élément de paroi 70 a une surface externe dont la section en coupe horizontale a une forme de « U » ou de « C » délimitant un espace creux à l'extérieur du composant externe 2. Bien que les dessins montrent un raccord de connexion fluidique RC en saillie dans l'espace creux par rapport à l'élément de paroi 70, on peut prévoir d'autres formes de réalisation du raccord RC, dès lors qu'il est permis de raccorder la sortie 6 à la voie L8 d'aspiration du flux F' d'eau liquide filtrée par le média 5. De la même façon, l'eau liquide provenant du réservoir 55 peut être amenée de diverses façons dans la région de filtration RF et l'utilisation d'une coque 11 (ici porteuse de la valve CV) soudée à une autre partie pleine (élément de paroi 70) n'est qu'un exemple de réalisation pour permettre au dispositif de filtration 1 d'être immergé dans l'eau du réservoir.

Comme visible sur la figure 1, le dispositif de filtration 1 peut présenter des moyens 16, M1 pour s'opposer à la présence de bulles d'air dans la voie d'aspiration L8 par suppression et/ou évacuation de bulles d'air (bulles BB pouvant se former ou atteindre une région basse proche de la paille d'aspiration, comme montré sur la figure 4B) au niveau de l'étage de filtration, de sorte que de telles bulles d'air BB ne dépassent pas la région de filtration RF. Pour cela, de tels moyens 16, M1 sont agencés en amont de la sortie 6 formée par le raccord de connexion fluidique RC. Une toile T peut ainsi être intégrée, optionnellement, dans le média filtrant 5 afin de favoriser le passage d'eau et barrer le passage de bulles d'air (par exemple en fin d'amorçage). La toile T est par exemple intégrée lors d'une étape de laminage, en étant agencée comme une couche supplémentaire.

Typiquement, le média filtrant 5 peut inclure une partie ou couche de média à poussières et la toile T qui présente une épaisseur plus faible que l'épaisseur de la couche de média de séparation de poussières. Cette configuration peut être obtenue en formant un média plissé ou non plissé. Lorsque le média filtrant 5 inclut une partie ou couche de média à poussières et la toile T, on limite la complexité d'assemblage du dispositif 1.

Dans des variantes, la toile T peut être fixée ou surmoulée sur une paroi, par exemple une paroi ajourée à travers laquelle peut circuler l'eau. La toile T peut se situer dans la région de filtration RF, en étant directement fixée sur le composant externe 2.

La toile T forme une maille dont les passages ou interstices ont une taille favorable au passage de l'eau. De plus la toile T peut inclure un matériau hydrophile utilisé au moins dans un revêtement de surface de cette toile T, de préférence comme constituant de la toile T. La toile est conçue pour empêcher ou inhiber l'écoulement de gaz, comme par exemple, mais sans s'y limiter, les bulles de gaz/d'air (c'est-à-dire le gaz emprisonné dans l'eau liquide W). Dans certaines options de réalisation, le dispositif de filtration 1 comprend une toile T formant un tamis dont le maillage est fin. La toile peut être en polymère synthétique (par exemple, nylon, polyéthylène, polypropylène, etc.). Les zones de passage étant non visibles à l'oeil nu, le terme toile T est ici utilisé, par opposition au terme de « grille » qui suppose de percevoir nettement les ouvertures de passage.

La toile T peut être flexible, semi-rigide ou rigide. Indépendamment de sa position relative par rapport à la couche principale du média filtrant 5, la toile T présente une taille de maille donnée et présente la caractéristique d'avoir une perte de charge plus élevée vis-à-vis de l'air que de l'eau, et d'autant plus que la toile est mouillée.

Dans l'exemple de la figure 1, la toile T forme la face 5b du média filtrant 5. En variante, elle peut être interposée entre cette face 5b est un passage inférieur 14 par lequel le liquide filtré par la ou les couches du média filtrant 5 s'écoule avant de remonter vers la sortie 6. Plus généralement, on peut placer ce type de moyens M1 de suppression de bulles d'air en aval d'une couche principale du média filtrant 5 servant à séparer les poussières ou particules solides analogues, dans la zone d'aval Z2.

Selon d'autres modes de réalisation, cette toile T peut être placée en amont du média filtrant 5. On comprend que la taille de maille de la toile T puisse s'opposer au passage de bulles d'air, en tout cas pour ce qui concerne les bulles d'air ayant une taille supérieure à celle de la taille de maille. Une ouverture ou taille de maille de 100 microns réduit en pratique suffisamment la quantité de bulles de gaz (bulles d'air) dans la zone d'aval Z2, de sorte qu'on puisse considérer que le flux d'eau liquide filtrée amené vers la sortie 6 est un flux continu de liquide, malgré une zone de circulation ascendante d'eau liquide filtrée prévue du côté de la sortie. Une ouverture ou taille de maille comprise entre 1 et 100, de préférence entre 1 et 50 microns peut être utilisée dans certaines formes de réalisation.

Le cas échéant, la toile T peut être surmoulée sur une paroi nervurée et placée en regard de la face 5a amont du média 5. La toile T peut alors former une couche préfiltrante, en contact avec l'eau liquide W du réservoir 55, en recouvrant de manière espacée (vu de l'extérieur) tout ou partie de la face 5a.

En référence aux figures 1 et 4A à 4D, on peut voir que l'eau filtrée peut converger vers un canal 9 de circulation ascendante menant vers la sortie 6 formée dans le raccord RC. Pour cela, il peut être prévu dans le corps externe 2 un ensemble 7 de liaison qui inclut le raccord RC dans une position plus haute que le fond 2a du boîtier de filtre ou composant externe 2, en délimitant une voie coudée VC de circulation d'eau filtrée, visible sur la figure 4A. La voie coudée VC inclut ici :
- le canal 9 de circulation ascendante d'eau filtrée par le média filtrant 5, qui peut longer l'élément de paroi 70 appartenant à l'ensemble de liaison 7 ; et
- un canal de sortie délimité par le raccord de connexion fluidique RC.

Bien que les dessins montrent un canal 9 de circulation ascendante agencé parallèlement à la direction d'axe Z est un canal de sortie horizontale (parallèle à la direction d'axe X), d'autres directions compatibles avec une configuration coudée peuvent être utilisées.

Le passage inférieur 14 forme un passage de transition, entre la région de filtration RF où sont placées la ou les couches de filtration et l'éventuelle toile T et la région d'évacuation RE qui peut correspondre à la voie coudée VC ou une voie similaire avec un tronçon de remontée de l'eau filtrée.

Afin de délimiter le canal 9 de circulation ascendante, il est prévu une paroi P de séparation qui est solidaire de ou inclus dans l'élément 7 de liaison. Dans l'exemple illustré, cette paroi P consiste en une pièce 3 semi tubulaire, comme visible sur la figure 3. La paroi P comprend une extrémité haute fermée 24, une portion latérale agencée comme un demi-tube qui s'étend de l'extrémité haute jusqu'à un bord inférieur qui délimite le passage inférieur 14. Plus généralement on peut utiliser toute structure adaptée pour délimiter, ici à l'intérieur du composant externe 2, le canal 9 de circulation ascendante, de préférence en prévoyant une paroi P de séparation afin que le flux sortant de la face 5b du média filtrant 5 soit dévié vers le bas (pour contourner la paroi P) avant de remonter dans le canal 9 correspondant ici à une paille d'aspiration.

La paroi P de séparation peut présenter une hauteur au moins égale à 75% de la hauteur H5 du média filtrant 5. En référence à la figure 3, lorsqu'une structure en demi-tube est prévue pour former la paroi P, cette dernière peut être éloignée de chacune des terminaisons 51, 52 du média filtrant 5 et présenter une largeur L2 inférieure d'au moins un facteur trois ou quatre par rapport à la longueur développée L5 du média filtrant (avec L2 / L5 ≤ 3). La pièce 3 peut recouvrir entièrement par l'intérieur la jonction avec le raccord RC. La pièce 3 présente éventuellement une bride 3f en U inversé permettant sa fixation, par collage ou soudure par exemple, contre l'élément de paroi 70.

La pièce 3 peut être en matière plastique moulée et soudée à une autre pièce en plastique moulée constituant l'élément de paroi 70. Dans des modes de réalisation préférés, l'ensemble de liaison 7 est réalisé d'un seul bloc pour constituer à la fois le raccord RC, l'organe C7 et l'élément de paroi 70 sur lequel est soudé ou fixé intérieurement la paroi P.

Dans la variante de la figure 9 ou dans d'autres exemples, la paroi P fait partie intégrante de l'élément de paroi 70, de préférence en délimitant un évidement ou creusement permettant de former le canal 9. L'obturation du canal 9 par l'extérieur est réalisée par un élément rapporté qui peut être solidaire ou conçue d'une seule pièce avec le raccord RC.

Quelle que soit la conception choisie pour réaliser la paroi P, on peut obtenir un cloisonnement, avec un agencement de cette paroi P interposé entre la deuxième face 5b et le raccord de connexion fluidique RC, de sorte que la paroi P forme une cloison séparant la région de filtration RF du canal 9 de circulation ascendante d'eau filtrée par le média filtrant 5. En référence aux figures 4a à 5C, on peut voir que l'arrivée d'eau par le bas du dispositif 1 permet à l'eau d'atteindre le niveau du passage inférieur 14, ce qui conduit rapidement à isoler du canal 9 de circulation ascendante l'air présent au-dessus de l'eau dans la région de filtration RF. La ou les ouvertures/évents O peuvent en outre faciliter l'échappement d'air par le haut, au moins dans une telle phase de remplissage en eau liquide W au cours de laquelle l'eau atteint d'abord un niveau correspondant au passage inférieur 14 avant de remplir davantage la région d'évacuation RE. Comme visible sur les figures 1 et 4A à 5C, la ou les ouvertures supérieures sont typiquement des évents O situées entièrement plus haut que le niveau de la sortie 6, qui est lui-même écarté verticalement du fond 2a (en étant situé plus haut).

En référence aux figures 4A et 4B, à la fin du remplissage en eau (imprégnation/immersion complète du dispositif 1), on peut voir dans le dispositif de filtration 1 qu'il peut rester une poche d'air dans la voie coudée VC ou tout autre voie similaire de la région d'évacuation (en aval du passage inférieur 14), ici distincte de la région/chambre de filtration. Cette poche d'air peut être chassée, en activant la pompe 80, typiquement dans une phase d'amorçage. Les figures 4C et 4D illustrent cette activation de la pompe 80, ce qui permet à l'eau de remplir la voie coudée VC. Dans certaines options, il est prévu un orifice, à fonction de dégazage, dans la paroi P afin de faire fuiter davantage d'air dès le début (fonction d'évent de l'orifice). En pratique, un tel orifice peut constituer un évent d'équilibrage de pression.

Un bon équilibre de pression entre le côté sale et le côté propre permet de récupérer plus sûrement de l'eau (i.e. uniquement de l'eau filtrée) à la sortie 6 du dispositif de filtration 1. Or, lorsque l'eau filtrée est aspirée au niveau de la région d'évacuation RE par mise en fonctionnement de la pompe 80, le niveau d'eau côté propre en aval du média 5 entre la paroi P (figure 1) et la partie 16 de barrage ou face de sortie du média 5 peut baisser rapidement par comparaison au niveau d'eau dans la paille.

Un tout petit orifice prévu dans la paroi P, typiquement à mi-hauteur (non représenté) permet de réaliser une communication entre le canal de circulation ascendante 9 et la partie de zone d'aval Z2 située dans la région de filtration RF, afin d'atteindre une situation non déséquilibrée en pression dans le canal 9. Ceci limite efficacement le risque d'avoir un manque de remplissage en eau liquide en aval du passage inférieur 14.

Ce genre d'orifice, par exemple de taille submillimétrique, évite de se retrouver dans une situation de déficit d'eau important d'un seul côté de la paroi de séparation P. Ainsi, avec une voie coudée VC ou autre configuration similaire formant la paille d'aspiration près de la sortie 6, il peut être évité des irrégularités ou la présence de bulles dans l'alimentation en eau vers la pompe 80. L'orifice ou moyens analogues d'équilibrage de pression permettent de s'opposer à la génération de bulles d'air près du passage inférieur 14 dans la zone en aval Z2, tandis que les moyens M1 tels qu'une toile comme montrés sur la figure 1 s'opposent à ce que des bulles (tout du moins pas des bulles d'air de taille significative) dépassent la toile prévue juste en amont de la paroi de séparation P, c'est-à-dire en amont du passage inférieur 14.

La partie 16 de barrage, les moyens M1 optionnels et l'éventuel orifice de la paroi P du genre décrits ci-dessus ici s'opposent efficacement à la présence de bulles d'air en sortie de filtre et donc dans la voie d'aspiration L8 pour protéger la pompe 80. Ils permettent aussi d'éviter les phénomènes de cavitation. En fonctionnement, ceci contribue à améliorer efficacement l'injection d'eau en maîtrisant précisément la quantité d'eau injectée.

Dans des options avec une paroi P6 ou P davantage espacée du média filtrant 5, on peut éventuellement se passer de l'orifice ou de moyens similaires formant au moins une voie d'équilibrage de pression en parallèle du passage inférieur 14, car plus on augmente le volume côté propre (à l'intérieur), moins on a besoin de cet orifice. En effet, le fait de prévoir davantage d'espace en aval du média 5 limite le risque de voir apparaître des bulles d'air, sachant que la partie de barrage et les moyens M1 optionnels, prévus pour supprimer les bulles par un effet barrière, sont efficaces pour prévenir l'arrivée de bulles dans la région du passage inférieur 14.

En référence aux figures 4A-AD, 5A-5C et 6, le dispositif de filtration 1 est intégré dans un module 8 de prélèvement de l'eau, ici dans le volume intérieur V délimité par un corps externe du module 8. Le corps externe du module 8, d'une hauteur qui ne dépasse pas 150 ou 160 mm, peut délimiter plusieurs compartiments C1, C2, comme visible sur la figure 6, dont l'un sert à loger de façon étanche un mécanisme ou moteur d'une pompe d'alimentation 80. La pompe d'alimentation 80 peut être électrique. Elle présente l'entrée E1 et une sortie E2. La paroi externe latérale du corps du module peut être pourvue de tronçons de cylindre. La compacité en hauteur est réduite, du même ordre de grandeur que la longueur d'un téléphone portable.

Dans l'exemple illustré sur la figure 6, le module 8 peut contenir le dispositif de filtration 1 dans une zone périphérique au compartiment C1 logeant tout ou partie de la pompe d'alimentation 80. L'ensemble constituant le module 8, tel que montré sur la figure 6, peut tenir dans un espace cubique de l'ordre de 5 ou 6 dm³, à l'éventuellement exception d'une canule formant la sortie E2. Par ailleurs, la hauteur H du dispositif 1, comme visible sur la figure 2, peut être similaire ou légèrement inférieure à la plus grande dimension d'encombrement latéral. Cette hauteur H est par exemple comprise entre 45 et 70 mm, tandis que l'extension latérale maximale du dispositif 1 peut être inférieure ou égale à 90 ou 95 mm.

Dans un mode d'injection, l'eau liquide W est pompée par la pompe d'alimentation 80 pour sortir du module 8 via la sortie E2. Le dispositif de filtration 1 est placé en amont de la pompe d'alimentation 80 suivant le sens de circulation du liquide dans le mode d'injection. Le dispositif 1 empêche donc les impuretés d'atteindre l'entrée E2 de la pompe d'alimentation 80.

En fonctionnement, l'eau W entre dans le dispositif filtrant 1 au moins par le bas, sous la face de la partie de dos exposée à l'eau remplissant le réservoir 55, via la ou les régions d'accès délimitées sous le bord inférieur 2d de la partie de dos du composant externe 2 (correspondant par exemple au bas de la coque 11) ou composant d'enveloppe analogue. Ces ouvertures forment la partie d'entrée ou entrée 4 du dispositif 1.

Un exemple non limitatif d'un module 8 de prélèvement d'eau va à présent être décrit en référence aux figures 4A à 7. Le module 8 est adapté pour être monté dans une ouverture d'une paroi inférieure d'un réservoir 55. Le module 8 comporte un corps de module 18 délimitant un volume intérieur V pour la réception de l'eau liquide W ou solution aqueuse analogue. Le module 8 comprend une pompe d'alimentation 80, par exemple avec un partie moteur (par exemple un moteur à commutation électronique, généralement appelé BLDC), une transmission et d'autre composant habituels. La pompe d'alimentation 80 peut être constituée au moins de trois parties distinctes :
- la partie moteur, qui fournit la puissance nécessaire au pompage ;
- la transmission ; et
- la partie hydraulique, qui transmet la puissance qui lui est transmise par la transmission à l'eau pour la déplacer (l'aspirer et/ou la refouler).

La pompe d'alimentation 80 peut être d'un genre connu en soi.

Ici, on ne décrit pas trop en détail la pompe 80 et ses composants, dans la mesure où une large variété d'unités de pompage peut être utilisée. On peut se référer au descriptif du document EP 3324031 A1 pour certains détails des entrées et sorties associées à un dispositif de pompage permettant de former le module 8 de prélèvement d'eau.

Un dispositif de chauffage peut être prévu à proximité de parois intérieures délimitant le volume V et qui permettent ici de chauffer l'eau. Le chauffage est de préférence un chauffage électrique. Le compartiment C2 peut être délimité par une paroi extérieure dont la forme est telle qu'un volume intérieur est créé pour recevoir un groupe de pompe d'alimentation 80 et optionnellement une pompe à jet.

Le dispositif de filtration 1 peut consister en un filtre compact qui est intégré dans le module 8 en étant immergé dans l'eau W, en amont de la pompe d'alimentation 80, en mode injection, c'est-à-dire en amont de l'entrée E1. Dans la version illustrée, le module 8 peut contenir le compartiment C2 qui forme un réceptacle étanche pour le moteur de la pompe d'alimentation 80 et un compartiment C1 périphérique pour le dispositif de filtration 1. L'eau W entre dans le compartiment périphérique qui forme le premier compartiment C1, passe à travers le média filtrant 5 du dispositif de filtration 1 et quitte le compartiment C1 périphérique en pénétrant dans l'entrée E1.

En référence à la figure 1, après la filtration via le média 5, et la limitation ou suppression de bulles (par le guidage défavorable à la pénétration d'air éventuellement complété par l'effet antibulle au niveau de la toile T), le niveau du flux d'eau filtré et sortant de la face 5b peut être plus ou moins bas, selon que le réservoir 55 est plus ou moins rempli. La structure de paille formée ici par la réunion des parois P6 et P permet d'aspirer l'eau à point relativement bas. Dans le cas de la figure 1, deux chemins séparés servent, en parallèle et dans un mode d'aspiration de la pompe 80, à acheminer l'eau filtrée dans le raccord de connexion fluidique RC via la structure de paille d'aspiration. Ces deux chemins passent :
- l'un par l'ouverture 14' de passage formée à l'extrémité inférieure de la structure de paille d'aspiration verticale (entrée de la paille formant le canal 9), en position adjacente au passage inférieur 14, afin de permettre d'acheminer de l'eau filtrée située à un bas niveau du réservoir d'eau 55 ;
- optionnellement par un orifice (non montré) d'équilibrage de pression situé dans la paroi P plus haut (ici au moins 15 ou 25 mm plus haut) que l'ouverture 14' de passage, afin de permettre d'acheminer de l'eau filtrée à l'intérieur de la structure de paille, tant que le niveau de remplissage du réservoir d'eau 55 atteint ou dépasse le niveau de l'orifice O2.

En référence à la figure 4B, il est illustré l'endroit typique de formation de bulles d'air BB, le risque de former de telles bulles B étant plus important en l'absence de partie 16 de barrage et aussi, dans une moindre mesure, lorsque le média 5 est proche du canal 9 (avec un faible espacement vis-à-vis de la paroi P). On voit ici que le passage inférieur 14 peut constituer le chemin unique pour contourner la paroi P et toute l'eau filtrée passe ainsi par ce passage inférieur 14.

En référence à la figure 9, il est illustré -du côté intérieur - l'élément de liaison 7 dans une option de réalisation avec le raccord RC rapporté sur l'élément de paroi 70. Avec ce type de conception, le traitement de l'eau peut être identique au cas susmentionné et décrit notamment en liaison avec la figure 1.

L'élément de paroi 70 montré sur la figure 9 peut consister en une pièce formée séparément du raccord RC et constitutive du boîtier ou composant externe 2. Plus particulièrement, l'élément de liaison 7 peut être réalisé en deux parties ou en deux pièces :
- une pièce 12 formant l'élément de paroi 70, apte à former une partie complémentaire de la coque 11, cette pièce 12 incluant deux panneaux 7a, 7b latéralement séparés l'un de l'autre ainsi qu'une partie intermédiaire reliant les deux panneaux 7a, 7b et portant la paroi de séparation P ; et
- le raccord de connexion fluidique RC qui inclut l'embout tubulaire de connexion et la partie de base P6 pour la fixation du raccord RC par l'extérieur sur la partie intermédiaire, de sorte que la partie de base P6 et la paroi de séparation P délimitent le canal 9 de circulation ascendante.

De préférence, la pièce 12 formant l'élément de paroi 70 est en matériau plastique rigide et incurvée du côté extérieur, de sorte que les panneaux 7a, 7b forment en coupe horizontale les deux branches d'une section en « U », en étant situés de part et d'autre du raccord RC. La paroi de séparation P peut être formée en saillie vers l'intérieur par rapport au reste de l'élément de paroi 70, en ayant son bord inférieur BP décalée plus haut que l'extrémité inférieure de l'élément de paroi 70. Cette disposition permet, en l'absence de paroi de fond inférieure reliée au bord inférieur BP, de délimiter par le bord inférieur BP une ouverture relativement étroite qui débouche verticalement vers le bas. Cette ouverture est ici l'ouverture de passage verticale 14' de la structure de paille d'aspiration qui est formé à l'état assemblé de la partie de base P6 et de la paroi de séparation P.

Comme visible sur la figure 9, des nervures intérieures R7, éventuellement horizontales, ou tout autre type de reliefs internes font saillie vers l'intérieur pour maintenir un espacement relatif entre le média filtrant 5 et la face interne de l'élément de liaison 7. Ceci permet d'optimiser la compacité et l'assemblage du média filtrant 5. L'élément de paroi 70 peut, après installation du média 5 dans la coque 11, être directement soudé ou fixé d'une autre façon à la bordure B11 de la coque 11, par exemple en utilisant une bride de soudage, un flasque ou un rebord 7f annulaire.

## Revendications

1. Dispositif de filtration utilisable dans un module (8) de prélèvement d'eau, et apte à épurer de l'eau liquide (W) d'un réservoir d'eau destinée à une chambre de combustion (400) d'un véhicule (15), le dispositif de filtration (1) incluant :
i) un composant externe (2) qui présente au moins une entrée (4) par laquelle l'eau liquide (W) du réservoir d'eau peut atteindre une région de filtration (RF), une extrémité supérieure (2b) et une paroi latérale (2c) qui s'étend entre l'extrémité supérieure (2b) et l'entrée ;
ii) un média filtrant (5) entouré par le composant externe (2) en s'étendant dans la région de filtration sous l'extrémité supérieure (2b) ;
iii) une sortie (6) d'évacuation d'eau liquide filtrée, la sortie (6) étant formée dans un raccord de connexion fluidique (RC), le média filtrant (5) étant interposé entre l'au moins une entrée (4) et la sortie (6) ;
iv) une voie coudée (VC) de circulation d'eau filtrée incluant un canal (9) de circulation ascendante d'eau filtrée par le média filtrant (5) et un canal de sortie délimité par le raccord de connexion fluidique (RC) ; et
v) une valve (CV) anti-retour montée sur le composant externe (2) et prévue dans une partie (16) de barrage incluant l'extrémité supérieure (2b) et la paroi latérale (2c) ;
le dispositif permettant d'épurer l'eau liquide (W) du réservoir d'eau dans une configuration de montage dans laquelle ledit canal (9) de la voie coudée (VC) assure une circulation ascendante d'eau vers le canal de sortie, le composant externe étant pourvu d'une extrémité inférieure (2a) opposée à l'extrémité supérieure (2b),
dans lequel la partie (16) de barrage du dispositif s'étend au-dessus de l'entrée (4) dans la configuration de montage, pour permettre d'empêcher l'accès à la région de filtration (RF) au-dessus de ladite entrée (4),
dans lequel ledit média filtrant (5), fixé au composant externe et/ou maintenu dans un volume interne du composant externe (2), en s'étendant dans la région de filtration (RF), sous l'extrémité supérieure (2b) dans la configuration de montage, est entouré par la paroi latérale (2c) appartenant à la partie (16) de barrage, le média filtrant (5) étant interposé entre ladite entrée (4) et la sortie (6) ;
et dans lequel un clapet est prévu dans la valve anti-retour (CV), sachant qu'au moins un évent (O) formé dans la partie de barrage :
- est obturé par défaut par le clapet de la valve anti-retour (CV),
- définit un accès entre la région de filtration (RF) et une zone externe au dispositif de filtration (1) sans passer par ladite entrée (4), pour une position décalée et/ou déformée du clapet obtenue lorsque le clapet est soumis à une surpression du côté de la région de filtration (RF),
la valve (CV) du dispositif de filtration (1) permettant de former une voie de dégazage lorsque de l'air circule de façon ascendante le long de la partie (16) de barrage ou est mis sous pression dans la région de filtration (RF).

2. Dispositif selon l'une la revendication 1, dans lequel la valve anti-retour (CV) présente un clapet (100) pourvue d'une partie mobile à forme plate ou en tête de champignon, reliée à une tige de montage traversant la partie (16) de barrage.

3. Dispositif selon la revendication 1 ou 2, dans lequel, dans la configuration de montage, le ou les évents (O) sont configurés pour permettre une évacuation de gaz par le haut au moins dans une phase de remplissage en eau liquide (W) de la région de filtration (RF).

4. Dispositif selon l'une quelconque des revendications 1 à 3, dans lequel, dans la configuration de montage, le raccord de connexion fluidique (RC) est placé plus haut que l'entrée (4), et dans lequel l'extrémité supérieure (2b) du composant externe (2) est ajourée pour définir le ou les évents (O) qui débouchent plus haut que le raccord de connexion fluidique (RC).

5. Dispositif selon la revendication 4, dans lequel le dispositif de filtration (1) présente des moyens (M1, 16) pour s'opposer à la présence de bulles d'air dans le raccord de connexion fluidique (RC), qui sont agencés en amont de la sortie (6) formée par le raccord de connexion fluidique (RC).

6. Dispositif selon la revendication 4, dans lequel les moyens pour s'opposer à la présence de bulles d'air comprennent la partie (16) de barrage, conçue et agencée pour permettre de laisser passer de l'eau liquide dans un canal (9) de circulation ascendante d'eau qui :
- s'étend en aval du média filtrant (5) suivant le sens de filtration ; et
- communique avec la voie d'aspiration (L8) via la sortie (6).

7. Dispositif selon l'une quelconque des revendications 1 à 6, dans lequel le dispositif de filtration (1) comprend :
- une paroi (P) de séparation conçue en tant que cloison sensiblement verticale dans l'agencement et séparant la région de filtration (RF) d'une région d'évacuation (RE) en communication avec la sortie (6) ; et
- un passage inférieur (14) proche du fond (2a) ou longeant le fond (2a) pour acheminer de l'eau filtrée de la région de filtration (RF) vers la région d'évacuation (RE) ;
et dans lequel la paroi (P) de séparation est configurée pour obliger l'eau à remonter de façon ascendante depuis le passage inférieur (14) au moins jusqu'à un passage supérieur (15) débouchant à l'intérieur d'un embout tubulaire mâle qui fait partie d'un raccord de connexion fluidique (RC).

8. Dispositif selon la revendication précédente, dans lequel ladite entrée (4) est délimitée par un bord inférieur (2d) de la paroi latérale (2c), ledit bord inférieur (2d) s'étendant plus haut que le passage inférieur (14).

9. Dispositif selon l'une quelconque des revendications précédentes, dans lequel le composant externe (2) présente un élément de paroi (70) concave depuis laquelle fait saillie, vers l'extérieur, le raccord de connexion fluidique (RC) où est formée la sortie (6).

10. Module (8) de prélèvement et distribution d'eau destinée à une chambre de combustion (400) d'un véhicule (15), le module comprenant un corps de module (18), une pompe d'alimentation (80) logée entièrement ou pour partie dans un compartiment de pompe, et le dispositif de filtration selon l'une quelconque des revendications 1 à 9,
le corps de module délimitant :
- un premier compartiment (C1), constituant ledit compartiment intérieur pour loger le dispositif de filtration (1) de façon immergé dans l'eau dans un état monté du module (8) dans un réservoir d'eau (55) ; et
- un deuxième compartiment (C2) constituant le compartiment de pompe ;
et dans lequel le dispositif de filtration (1) est connecté, de manière étanche et démontable, à un port de connexion fluidique qui :
- définit une entrée (E1) d'accès à une voie (L8) d'aspiration d'eau liquide appartenant à la pompe d'alimentation (80) ; et
- débouche extérieurement en direction du premier compartiment (C1) pour loger le dispositif de filtration (1),
ce grâce à quoi le dispositif de filtration (1) est monté amovible dans le module (8) en pouvant être retiré sélectivement du premier compartiment (C1) sans démonter un composant de la pompe d'alimentation (80).

11. Module (8) de prélèvement et distribution d'eau destinée à une chambre de combustion (400) d'un véhicule (15), le module comprenant un corps de module (18), une pompe d'alimentation (80) logée entièrement ou pour partie dans un compartiment de pompe délimité par le module, et le dispositif de filtration selon l'une quelconque des revendications 1 à 9, le dispositif de filtration (1) étant connecté de manière indémontable à un port de connexion fluidique qui définit une entrée (E1) d'accès à la voie (L8) d'aspiration d'eau liquide, de sorte qu'il est impossible d'extraire le dispositif de filtration (1) sans démonter un couvercle (81) de la pompe d'alimentation (80).

12. Utilisation d'un dispositif de filtration (1) pour permettre de filtrer de l'eau liquide (W) et acheminer cette eau dans une voie d'aspiration (L8) d'une pompe d'alimentation (80), dans un état immergé du dispositif de filtration (1) à l'intérieur d'un réservoir d'eau (55) présent dans un véhicule (15) à moteur à combustion interne, la pompe (80) étant prévue pour faire circuler l'eau filtrée vers une chambre de combustion (400) du véhicule (15), le dispositif de filtration (1) étant tel que défini dans la revendication 1 en incluant les caractéristiques i) à v).

## Patentansprüche

1. Filtervorrichtung, die in einem Wasserentnahmemodul (8) verwendbar ist und zum Reinigen von flüssigem Wasser (W) eines Wasserreservoirs fähig ist, das für eine Verbrennungskammer (400) eines Fahrzeugs (15) bestimmt ist, wobei die Filtervorrichtung (1) aufweist:
i) eine äußere Komponente (2), die aufweist: mindestens einen Einlass (4), durch den das flüssige Wasser (W) des Wasserreservoirs einen Filtrationsbereich (RF) erreichen kann, ein oberes Ende (2b) und eine Seitenwand (2c), die sich zwischen dem oberen Ende (2b) und dem Einlass erstreckt;
ii) ein Filtermedium (5), das von der äußeren Komponente (2) umgeben ist und sich in dem Filtrationsbereich unterhalb des oberen Endes (2b) erstreckt;
iii) einen Auslass (6) zum Abzug von filtriertem Wasser, wobei der Auslass (6) in einem Fluidverbindungsstück (RC) gebildet ist, wobei das Filtermedium (5) zwischen dem mindestens einen Einlass (4) und dem Auslass (6) angeordnet ist;
iv) einen gekrümmten Strömungspfad (VC) für filtriertes Wasser, der einen Steigströmungskanal (9) für von dem Filtermedium (5) filtriertes Wasser und einen von dem Fluidverbindungsstück (RC) begrenzten Auslasskanal aufweist; und
v) ein Rückschlagventil (CV), das an der äußeren Komponente (2) angebracht ist und in einem Sperrteil (16) vorgesehen ist, das das obere Ende (2b) und die Seitenwand (2c) aufweist;
wobei die Vorrichtung in einer Montagekonfiguration, in der der Kanal (9) des gekrümmten Pfads (VC) eine Steigströmung von Wasser zu dem Auslasskanal sicherstellt, erlaubt, das flüssige Wasser (W) des Wasserreservoirs zu reinigen, wobei die äußere Komponente mit einem dem oberen Ende (2b) gegenüberliegenden unteren Ende (2a) versehen ist,
in welcher in der Montagekonfiguration das Sperrteil (16) der Vorrichtung sich oberhalb des Einlasses (4) erstreckt, um zu erlauben, den Zugang zu dem Filtrationsbereich (RF) oberhalb des Einlasses (4) zu verhindern,
in welcher das in der Montagekonfiguration an der äußeren Komponente befestigte und/oder in einem Innenvolumen der äußeren Komponente (2) gehaltene Filtermedium (5) dadurch, dass es sich in dem Filtrationsbereich (RF) unterhalb des oberen Endes (2b) erstreckt, von der Seitenwand (2c) umgeben ist, die zu dem Sperrteil (16) gehört, wobei das Filtermedium (5) zwischen dem Einlass (4) und dem Auslass (6) angeordnet ist;
und in welcher in dem Rückschlagventil (CV) eine Klappe vorgesehen ist, und mindestens ein in dem Sperrteil gebildetes Luftabzugsloch (O)
- standardmäßig von der Klappe des Rückschlagventils (CV) verschlossen wird,
- einen Zugang zwischen dem Filtrationsbereich (RF) und einer Zone außerhalb der Filtervorrichtung (1), ohne den Einlass (4) zu passieren, definiert, nämlich für den Fall einer verschobenen und/oder verformten Position der Klappe, die sich ergibt, wenn die Klappe einem Überdruck auf der Seite des Filtrationsbereichs (RF) ausgesetzt ist,
wobei das Ventil (CV) der Filtervorrichtung (1) erlaubt, einen Entgasungspfad zu bilden, wenn Luft auf aufsteigende Weise entlang des Sperrteils (16) strömt oder in dem Filtrationsbereich (RF) unter Druck gesetzt ist.

2. Vorrichtung nach Anspruch 1, in welcher das Rückschlagventil (CV) eine Klappe (100) aufweist, die mit einem beweglichen plattenförmigen oder pilzkopfförmigen Teil versehen ist, der mit einer durch das Sperrteil (16) hindurchgehenden Montagestange verbunden ist.

3. Vorrichtung nach Anspruch 1 oder 2, in welcher in der Montagekonfiguration das oder die Luftabzugslöcher (O) konfiguriert sind, um zumindest in einer Phase des Füllens des Filtrationsbereichs (RF) mit flüssigem Wasser (W) ein Entweichen von Gas nach oben zu erlauben.

4. Vorrichtung nach einem der Ansprüche 1 bis 3, in welcher in der Montagekonfiguration das Fluidverbindungsstück (RC) höher als der Einlass (4) angeordnet ist, und in welcher das obere Ende (2b) der äußeren Komponente (2) perforiert ist, um das oder die Luftabzugslöcher (O) zu definieren, die höher als das Fluidverbindungsstück (RC) ausmünden.

5. Vorrichtung nach Anspruch 4, in welcher die Filtervorrichtung (1) Einrichtungen (M1, 16) zur Abwehr des Auftretens von Luftblasen in dem Fluidverbindungsstück (RC) aufweist, die stromauf des von dem Fluidverbindungsstück (RC) gebildeten Auslasses (6) angeordnet sind.

6. Vorrichtung nach Anspruch 4, in welcher die Einrichtungen zur Abwehr des Auftretens von Luftblasen das Sperrteil (16) aufweisen, das konzipiert und angeordnet ist, um zu erlauben, flüssiges Wasser in einen Wasser-Steigströmungskanal übertreten zu lassen, der:
- sich stromab des Filtermediums (5) erstreckt, gesehen in Filtrationsrichtung; und
- über den Auslass (6) in Verbindung mit dem Ansaugpfad (L8) steht.

7. Vorrichtung nach einem der Ansprüche 1 bis 6, in welcher die Filtervorrichtung (1) aufweist:
- eine Separationswand (P), die als eine im Wesentlichen vertikale Scheidewand in der Anordnung konzipiert ist und den Filtrationsbereich (RF) von einem Abzugsbereich (RE), der mit dem Auslass (6) in Verbindung steht, separiert; und
- einen unteren Durchlass (14) nahe an dem Boden (2a) oder längs des Bodens (2a), um das filtrierte Wasser des Filtrationsbereichs (RF) hin zu dem Abzugsbereich (RE) zu leiten;
und in welcher die Separationswand (P) konfiguriert ist, um das Wasser zu zwingen, von dem unteren Durchlass (14) auf aufsteigende Weise mindestens bis zu einem oberen Durchlass (15) aufzusteigen, der in das Innere eines männlichen Rohrstücks mündet, das Teil eines Fluidverbindungsstücks (RC) ist.

8. Vorrichtung nach dem vorstehenden Anspruch, in welcher der Einlass (4) von einem unteren Rand (2d) der Seitenwand (2c) begrenzt ist, wobei der untere Rand (2d) sich höher als der untere Durchlass (14) erstreckt.

9. Vorrichtung nach einem der vorstehenden Ansprüche, in welcher die äußere Komponente (2) ein konkaves Wandelement (70) aufweist, von dem aus das Fluidverbindungsstück (RC), an dem der Auslass (6) gebildet ist, nach außen vorspringt.

10. Modul (8) zur Entnahme und Verteilung von Wasser, das für eine Verbrennungskammer (400) eines Fahrzeugs (15) bestimmt ist, wobei das Modul einen Modulkörper (18), eine Speisepumpe (80), die ganz oder teilweise in einem Pumpenfach untergebracht ist, und die Filtervorrichtung nach einem der Ansprüche 1 bis 9 aufweist,
wobei der Modulkörper
- ein erstes Fach (C1), das das Innenfach bildet, um die Filtervorrichtung (1) derart aufzunehmen, dass sie in dem Wasser untergetaucht ist, wenn das Modul (8) in einem Wasserreservoir (55) montiert ist; und
- ein zweites Fach (C2) begrenzt, das das Pumpenfach bildet;
und in welchem die Filtervorrichtung (1) auf dichte und lösbare Weise mit einem Fluidverbindungsanschluss verbunden ist, der:
- einen Zugangseinlass (E1) zu einem Ansaugpfad (L8) für flüssiges Wasser, der zur Speisepumpe (80) gehört, definiert, und
- in Richtung des ersten Fachs (C1) ausmündet, das zur Aufnahme der Filtervorrichtung (1) ist,
dank dessen die Filtervorrichtung (1) auf abnehmbare Weise in dem Modul (8) montiert ist, indem es selektiv aus dem ersten Fach (C1) genommen werden kann, ohne dass eine Komponente der Speisepumpe (80) auszubauen ist.

11. Modul (8) zur Entnahme und Verteilung von Wasser, das für eine Verbrennungskammer (400) eines Fahrzeugs (15) bestimmt ist, wobei das Modul einen Modulkörper (18), eine Speisepumpe (80), die ganz oder teilweise in einem von dem Modul begrenzten Pumpenfach untergebracht ist, und die Filtervorrichtung nach einem der Ansprüche 1 bis 9 aufweist, wobei die Filtervorrichtung (1) auf eine nichtlösbare Weise mit einem Fluidverbindungsanschluss verbunden ist, der einen Zugangseinlass (E1) zu dem Ansaugpfad (L8) für flüssiges Wasser definiert, so dass es unmöglich ist, die Filtervorrichtung (1) herauszuziehen, ohne einen Deckel (81) der Speisepumpe (80) zu demontieren.

12. Verwendung einer Filtervorrichtung (1), um Filtern von flüssigem Wasser (W) zu erlauben und dieses Wasser in einen Ansaugpfad (L8) einer Speisepumpe (80) zu leiten, wenn die Filtervorrichtung (1) im Innern eines Wasserreservoirs (55) untergetaucht ist, das in einem Fahrzeug (15) mit einem Verbrennungsmotor vorhanden ist, wobei die Pumpe (80) vorgesehen ist, das filtrierte Wasser zu einer Verbrennungskammer (400) des Fahrzeugs (15) zu befördern, wobei die Filtervorrichtung (1) derart ist, wie in dem Anspruch 1 unter Einschluss der Merkmale i) bis v) definiert ist.

## Claims

1. Filtration device for use in a water extraction module (8), and suitable for purifying liquid water (W) from a water tank intended for a combustion chamber (400) of a vehicle (15), the filtration device (1) including:
i) an outer component (2) which has at least one inlet (4) through which the liquid water (W) from the water tank can reach a filtration region (RF), a top end (2b) and a side wall (2c) which extends between the top end (2b) and the inlet;
ii) a filtering medium (5) surrounded by the outer component (2) extending into the filtration region below the upper end (2b);
iii) a filtered liquid water discharge outlet (6), the outlet (6) being formed in a fluidic connection fitting (RC), the filtering medium (5) being interposed between the at least one inlet (4) and the outlet (6);
iv) an angled track (VC) for the circulation of filtered water including a channel (9) for upward circulation of water filtered by the filtering medium (5) and an outlet channel delimited by the fluidic connection fitting (RC); and
v) a non-return valve (CV) mounted on the outer component (2) and provided in a barrier part (16) including the upper end (2b) and the side wall (2c);
the device for purifying liquid water (W) from the water tank in an assembly configuration in which said channel (9) of the angled track (VC) provides an upward circulation of water to the outlet channel, the outer component being provided with a lower end (2a) opposite the upper end (2b),
wherein the barrier portion (16) of the device extends above the inlet (4) in the assembly configuration, to enable access to the filtration region (RF) above said inlet to be prevented,
wherein said filtering medium (5), fixed to the outer component and/or held in an internal volume of the outer component (2), by extending into the filtration region (RF), under the upper end (2b) in the assembly configuration, is surrounded
by the side wall (2c) belonging to the barrier part (16), the filtering medium (5) being interposed between said inlet (4) and outlet (6);
and wherein a check valve is provided in the non-return valve (CV), wherein at least one vent (O) formed in the barrier part:
- is closed by default by the check valve of the non-return valve (CV),
- defines an access between the filtration region (RF) and a zone external to the filtration device (1) without passing through said inlet (4), for an offset position and/or deformed position of the check valve obtained when the check valve is subjected to overpressure on the side of the filtration region (RF),
the valve (CV) of the filtration device (1) allowing a degassing path to be formed when air circulates upwards along the barrier portion or is pressurised in the filtering region.

2. Device according to claim 1, wherein the non-return valve (CV) has a check valve (100) provided with a flat or mushroom-head shaped movable part connected to a mounting rod passing through the barrier part (16).

3. Device according to claim 1 or 2, wherein, in the assembly configuration, the vent or vents (O) are configured to allow gas to be evacuated from above at least in a phase of filling the filtration region (RF) with liquid water (W).

4. Device according to any one of claims 1 to 3, wherein, in the assembly configuration, the fluidic connecting fitting (RC) is placed higher than the inlet (4), and wherein the upper end (2b) of the outer component (2) is apertured to define the vent or vents (O) which open higher than the fluidic connection fitting (RC).

5. Device according to claim 4, wherein the filtration device (1) has means (M1, 16) for opposing the presence of air bubbles in the fluidic connection fitting (RC), which are arranged upstream of the outlet (6) formed by the fluidic connection fitting (RC).

6. Device according to claim 4, wherein the means for opposing the presence of air bubbles comprise the barrier part (16), configured and arranged to allow liquid water to pass into a water upflow circulation channel (9) which:
- extends downstream of the filtering medium (5) in the direction of filtration; and
- communicates with the suction path (L8) via the outlet (6).

7. Device according to any one of claims 1 to 6, wherein the filtration device (1) comprises:
- a dividing wall (P) configured as a substantially vertical partition in the arrangement and separating the filtration region (RF) from a discharge region (RE) in communication with the outlet (6); and
- a lower passage (14) close to the bottom (2a) or running along the bottom (2a) for conveying filtered water from the filtration region (RF) to the discharge region (RE); and wherein the dividing wall (P) is configured to force the water upwards from the lower passage (14) at least to an upper passage (15) opening into a male pipe fitting which forms part of a fluidic connection fitting (RC).

8. Device according to the preceding claim, wherein said inlet (4) is delimited by a lower edge (2d) of the side wall (2c), said lower edge (2d) extending higher than the lower passage (14).

9. Device according to any one of the preceding claims, wherein the outer component (2) has a concave wall element (70) from which the fluidic connection fitting (RC) projects outwardly where the outlet (6) is formed.

10. Module (8) for extracting and distributing water intended for a combustion chamber (400) of a vehicle (15), the module comprising a module body (18), a feed pump (80) accommodated entirely or partly in a pump compartment, and the filtration device according to any one of claims 1 to 9,
the module body delimiting:
- a first compartment (C1) forming said inner compartment for accommodating the filtration device (1) so as be immersed in water in a mounted state of the module (8) in a water tank (55); and
- a second compartment (C2) forming the pump compartment;
and wherein the filtration device (1) is connected, in a sealed and removable manner, to a fluidic connection port which:
- defines an inlet (E1) for access to a liquid water suction route (L8) belonging to the feed pump (80); and
- opens externally towards the first compartment (C1) to accommodate the filtration device (1),
whereby the filtration device (1) is mounted removably in the module (8) by being selectively removable from the first compartment (C1) without disassembling a component of the feed pump (80).

11. Module (8) for extracting and distributing water intended for a combustion chamber (400) of a vehicle (15), the module comprising a module body (18), a feed pump (80) accommodated entirely or partly in a pump compartment delimited by the module, and the filtration device according to any one of claims 1 to 9, the filtration device (1) being connected in a non-detachable manner to a fluidic connection port which defines an inlet (E1) for access to the path (L8) so that it is impossible to extract the filtration device (1) without removing a cover (81) from the feed pump (80).

12. Use of a filtration device (1) to enable liquid water (W) to be filtered and this water to be fed into a suction path (L8) of a feed pump (80), in an immersed state of the filtration device (1) inside a water tank (55) provided in a vehicle (15) with an internal combustion engine, the pump (80) being provided to circulate the filtered water to a combustion chamber (400) of the vehicle (15), the filtration device (1) being as defined in claim 1 including features i) to v).
